(19) **Europäisches Patentamt**

**European Patent Office**

**Office européen des brevets**

(11) **EP 1 541 811 A2**

(12) **EUROPEAN PATENT APPLICATION**

(43) Date of publication:
**15.06.2005 Bulletin 2005/24**

(51) Int Cl.⁷: **F01K 17/02**, F23G 5/46, F02G 5/00

(21) Application number: **04022220.0**

(22) Date of filing: **17.09.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **18.09.2003 JP 2003325595**

(71) Applicant: **MATSUSHITA ELECTRIC INDUSTRIAL CO., LTD.**
**Kadoma-shi, Osaka 571-8501 (JP)**

(72) Inventors:
 • **Miyauchi, Shinji**
  **Shiki-gun Nara 636-0311 (JP)**
 • **Ueda, Tetsuya**
  **Kasugai-shi Aichi 487-0032 (JP)**
 • **Ozeki, Masataka**
  **Izumi-shi, Osaka 594-0071 (JP)**

(74) Representative: **Patentanwälte**
**Leinweber & Zimmermann**
**Rosental 7**
**80331 München (DE)**

(54) **Cogeneration system**

(57) A cogeneration system of the present invention includes: a power generation system (1) equipped with a power generator (11); waste heat utilization system (2) for recovering waste heat from the power generator (11), storing the heat, and utilize the waste heat as an effective output thermal energy; and a waste heat utilization promoting system for promoting utilization of the effective output thermal energy in the waste heat utilization system (12) to avoid a stop of the system associated with a heat storage amount reaching a full amount. A waste heat utilization promoting system (3) is equipped with a stop predicting function to predict an operation stop of the power generation system (1) by comparing a current operating state with a reference pattern and computing an operation sustainable time, and a stop warning function to give the user a warning of the operation stop with an image or sound according to stop prediction information obtained.

Fig. 1

warning device → stop warning function
32

central controller → stop predicting function
31

timing means ⌐311   ⌐312

data collecting and storage means ⟵------- various detectors

image display portion
322

sound alarm portion
323

control portion

comparator means ⟵ memory means

314   313

computing means ⌐315

stop predicting means ⌐316

321

3 waste heat utilization promoting system

Fig. 2

**Description**

BACKGROUND OF THE INVENTION

1. Field of the Invention

The present invention relates to a cogeneration system equipped with a power generator for generating electric power and a heat recovery means for recovering heat (waste heat) that is generated in association with electric power generation.

2. Description of Related Art

As a conventional example of a method for displaying an operating state in a power generation system, there has been a method, which is employed in a solar power generation apparatus, of displaying an instantaneous value of generated power, a change over time of a generated electric power amount from the start of power generation, a cumulative amount of generated electric power in a given period (one day, one month, one year, etc.), and so forth, on a remote controller equipped within the system. Among cogeneration systems equipped with a power generator and a heat recovery means, there has been a system with a configuration in which the user can keep track of and confirm the merit of the economic efficiency and energy saving performance of the cogeneration system from the amount of electricity generated by the power generator, the amount of heat recovered by the heat recovery means, and the amount of consumed energy required for operating the system, and the usage of waste heat recovered by the heat recovery means (for example, see Japanese Unexamined Patent Application Publication No. 2002-286289 (pp. 2-10 and Fig. 1)). Fig. 18 is a schematic functional block diagram for illustrating a cogeneration system having such a configuration.

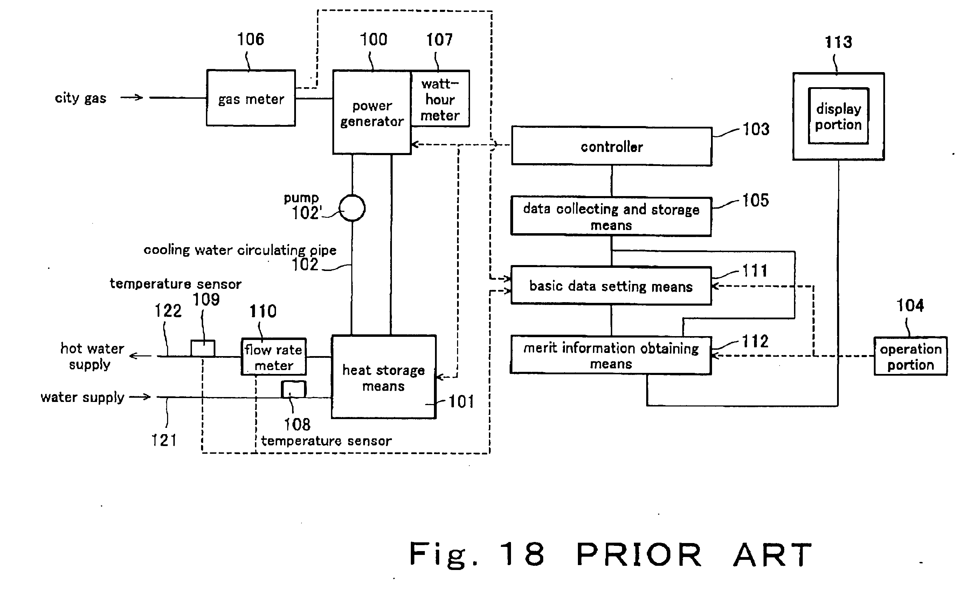

As shown in Fig. 18, this cogeneration system comprises a power generator 100 and a heat storage means 101 that supplies hot water utilizing waste heat associated with electric power generation. Here, the heat storage means 101 has a hot water storage tank (not shown), which is connected to a water supply pipe 121 and a hot water supply pipe 122. The power generator 100 and the heat storage means 101 are joined by a cooling water circulating pipe 102. The water of the hot water storage tank (heat storage means 101) is pressurized by a pump 102' and circulates through the cooling water circulating pipe 102 so as to passes through the power generator 100. Thereby, waste heat is recovered, and using the waste heat, hot water is produced and stored in the hot water storage tank (heat storage means 101). Thus, the cogeneration system with such a configuration recovers waste heat from the power generator 100 and produces hot water, which is temporarily stored in the heat storage means (hot water storage tank) 101 and taken out through the hot water supply pipe 122 so that the thermal energy retained by the hot water is utilized for various uses. Here, operations of the power generator 100 and the heat storage means 101 are controlled by a controller 103, and inputting of information necessary for the operation of the system is carried out through an operation portion 104.

This cogeneration system further comprises a data collecting and storage means 105 for collecting operation data. The data collecting and storage means 105 collects and stores data of the consumed amount of energy that is required for the cogeneration operation (specifically, the consumed amount of city gas supplied to the power generator 100 as a source material for power generation), data of the generated power amount of the power generator 100, and operation data necessary for keeping track of the consumed amount of the thermal energy (hereinafter referred to as "effective output thermal energy amount") that is recovered by the heat storage means 101 and is effectively used. Specifically, the data collecting and storage means 105 is configured to operate as follows. The data collecting and storage means 105 detects the supplied amount of the city gas, which is a source material for power generation, supplied to the power generator 100 with a gas meter 106, and collects and stores the detected information as a city gas consumed amount data of the power generator 100. It also detects the generated power amount by the power generator 100 with a watt-hour meter 107, and collects and stores the detected information as data. It also collects and stores effective output thermal energy amount data calculated according to a predetermined method based on later described respective detected amounts, For example, the effective output energy amount in this case can be obtained by detecting the temperature of the water supplied to the heat storage means 101 with a temperature sensor 108, by detecting the temperature and flow rate of the hot water obtained from the heat storage means 101 with a temperature sensor 109 and a flow rate meter 110, respectively, and by subjecting these detected amount data to arithmetic processing.

Further, the cogeneration system comprises a basic data setting means 111 and a merit information obtaining means 112.

In the basic data setting means 111, economic performance basic data and energy saving-performance basic data regarding the consumed amount of the energy required for the cogeneration operation, the generated power amount obtained, and the effective output thermal energy obtained are set in advance. Here, set therein as the economic performance basic data are: for example, a unit price of charges of city gas for the consumed amount of energy required for the operation; a unit price of charges of commercial electric power for the generated power; and the consumed amount of the city gas that is required when the same amount of effective output thermal energy is obtained with a gas-fired hot water supply system and a unit price of charges of the city gas for the effective output thermal energy, respectively. Also set therein as the energy saving-performance basic data are: for example, a basic unit for energy of city gas for the consumed amount of energy required for the operation, a basic unit of energy of commercial electric power for the generated power, and the amount of city gas required for obtaining an effective output energy of per a unit amount of gas supply hot water and a basic unit of energy of city gas for the effective output thermal energy, respectively.

The merit information obtaining means 112 calculates economic merit information of the cogeneration system based on the economic performance basic data of the basic data setting means 111 and the collected and stored data by the operation data collecting and storage means 105, and calculates energy saving-performance merit information based on the energy saving-performance basic data of the basic data setting means 111 and the collected and stored data of the operation data collecting and storage means 105.

Here, the economic merit of a cogeneration system is equivalent to the decrement of operating cost when the operating cost after the introduction of the system is compared with the cost before the introduction of the system. In this case, the cost before the introduction of the system is equivalent to the sum of a generated power cost GC and an effective output thermal energy cost QC (GC + QC), and the cost after the introduction of the system is equivalent to a consumed city gas cost SC. Accordingly, the economic merit is calculated through arithmetic processing according to the following equation (1). Then, the information of the calculated economic merit, that is, the decrement of the cost, is displayed on a display portion 113 as economic merit information.

$$\text{(Generated power cost GC + Effective output thermal energy cost QC) -}$$

$$\text{Consumed city gas cost SC} \qquad \text{Equation (1)}$$

Similarly, the energy saving merit of a cogeneration system can be defined by both the decrement of the primary energy consumed amount and the decrement of $CO_2$ emission before and after the introduction of the cogeneration system. Specifically, the former is the difference between the primary energy consumed amount before the introduction of the system and the primary energy consumed amount after the introduction thereof, and the latter is the difference between the $CO_2$ emission before the introduction of the system and the $CO_2$ emission after the introduction thereof. Such an energy saving merit can be calculated through arithmetic processing by the merit information obtaining means 112. The obtained energy saving merits, that is, the decrement of the primary energy and the decrement of the $CO_2$ emission before and after the introduction of the system, are displayed on the display portion 113 as the energy saving-performance merit information.

It should be noted that in the cogeneration system illustrated in Fig. 18 the user needs to pay attention to the economic merit information and the energy saving-performance merit information intentionally and positively at all times, and moreover, the user should make a judgment himself/herself based on the information to take an action to obtain the merits of the economic efficiency and the energy saving performance. Accordingly, improvement in the economic efficiency and energy saving performance is left up to the intention and act of the user himself/herself; so, even if the economic merit information and the energy saving-performance merit information are provided, it is impossible to utilize the economic merit information and the energy saving-performance merit information appropriately to enjoy their merits unless the user himself/herself acts intentionally and positively. As a consequence, a cogeneration operation, owing to which the cogeneration system is worth existing, cannot be functioned at the maximum effectiveness.

The following case illustrates such an example in which the cogeneration system does not function effectively as described above. If, for example, the monitor of the operating state of a cogeneration system is insufficient, or the user does not take an appropriate action for the merit information, the heat storage amount in the heat storage means 101 becomes full, and as a result, the heat recovery amount in the heat storage means 101 reaches the heat storage limit. If this happens, no more waste heat can be recovered. When waste heat cannot be recovered as such, the energy efficiency in the cogeneration system reduces, and the use of commercial electric power is less expensive in cost than the use of electric power generated by the cogeneration system. For this reason, in such a case, the cogeneration system usually stops its operation. Here, when the cogeneration system comprises a fuel cell serving as the power generator 100, a large amount of start-up energy is consumed to restart the power generator 100 once its operation is stopped since the fuel cell requires a large amount of start-up energy from the time when the cell is started up to the time when power generation becomes possible (i.e., when starting up). Thus, energy efficiency of the system as a whole reduces. Therefore, frequent operation stops reduce the energy saving performance and economic efficiency of the system, leading to degradation in the marketability of the cogeneration system.

SUMMARY OF THE INVENTION

In order to solve the foregoing and other problems, it is an object of the present invention to provide a cogeneration system that is excellent in energy saving performance and economic efficiency and is capable of exhibiting effectiveness of a cogeneration operation, which makes it possible to obtain electric power and heat at the same time. In order to accomplish the object, the present invention provides a cogeneration system comprising: a power generator configured to generate electric power and to be capable of supplying electric power to power load; heat recovery means for recovering waste heat from the power generator; heat storage means for storing the waste heat recovered by the heat recovery means to allow the waste heat to be used as a thermal energy; stop predicting means for predicting an operation stop of the power generator which is associated with a full heat storage amount of the heat storage means; and stop warning means for warning the operation stop of the power generator based on the stop prediction of the stop predicting means.

The stop predicting means may predict the operation stop of the power generator based on a change over time of a heat recovery amount in the heat recovery means, a change over time of a consumed thermal energy amount in the heat storage means, and a change over time of a heat storage amount in the heat storage means.

The stop predicting means may predict the operation stop of the power generator based on at least a generated power amount reference pattern, which is a reference pattern of a change over time indicating the change over time of the heat recovery amount, a consumed thermal energy amount reference pattern, which is a reference pattern of the change over time of the consumed thermal energy amount, and a heat storage amount reference pattern, which is a reference pattern of the change over time of the heat storage amount.

The stop predicting means may comprise memory means, and the memory means may store data of the generated power amount reference pattern, the consumed thermal energy amount reference pattern, and the heat storage amount reference pattern, which have been prepared in advance separately.

The stop predicting means may acquire respective change patterns over time of the generated power amount, the consumed thermal energy amount, and the heat storage amount in an operation during a predetermined period, and may create the generated power amount reference pattern, the consumed thermal energy amount reference pattern, and the heat storage amount reference pattern from the acquired respective change patterns over time.

The stop predicting means may acquire the generated power amount, the consumed thermal energy amount, and the heat storage amount in a current operation, compare the acquired respective changes over time thereof with the respective corresponding reference patterns, computes an operation sustainable time which is a duration from a current time until the heat storage amount reaches a full amount, and predict whether or not the operation of the power generator stops based on results of the comparison and the computation; and the stop warning means may perform the stop warning by at least one of an image or sound, based on stop prediction information from the stop predicting means.

The stop predicting means may calculate the operation sustainable time by dividing a remaining heat storage capacity in the heat storage means by a real heat recovery amount per unit time.

The stop predicting means may comprise: a power generation amount detector for detecting the generated power amount; a consumed thermal energy amount detector for detecting the consumed thermal energy amount; a heat recovery amount detector for detecting the heat recovery amount; data collecting and storage means for collecting and storing respective detected information obtained from the power generation amount detector, the consumed thermal energy amount detector, and the heat recovery amount detector; timing means for measuring time; computing means for computing the heat storage amount from the heat recovery amount and the consumed thermal energy amount and for computing the operation sustainable time; memory means for storing, as the reference patterns, the respective change patterns over time of the generated power amount, the consumed thermal energy amount, and the heat storage amount obtained from respective detected information detected by the power generation amount detector and the consumed thermal energy amount detector, the detected information being stored in the data collecting and storage means, the heat storage amount computed by the computing means, and a time signal from the timing means; comparator means for comparing the generated power amount, the consumed thermal energy amount, and the heat recovery amount acquired in the current operation with the respective corresponding reference patterns; and stop prediction-judging means for judging whether or not an operation shuts down from an operation sustainable time that has been computed and a result of the comparison by the comparator means; wherein the stop warning means may comprise at least one of image display means for displaying an image and sound alarm means for letting out sound based on the stop prediction information from the stop predicting means.

The stop warning means may perform the stop warning at predetermined time intervals within the operation sustainable time.

The stop warning performed by the stop warning means may include a waste heat utilization promotion advice that notifies a user to perform a use of thermal energy before a time of the stop prediction based on the reference pattern of the consumed thermal energy amount stored in the memory means of the stop predicting means.

The waste heat utilization promotion advice may include selection of whether or not to perform a use of the thermal energy automatically, and the stop warning means may control the cogeneration system so that the use of the thermal energy is automatically performed when the user selects to perform the use.

The use of the thermal energy may be a use of thermal energy associated with bathing, and the waste heat utilization promotion advice may be such as to recommend a use of hot water associated with bathing.

The stop predicting means may further comprise attention drawing level setting means for setting a level of drawing user's attention to the stop warning from the stop warning means; and the stop warning means may perform the stop warning according to the attention drawing level set by the attention drawing level setting means.

The stop warning means may perform the stop warning by means of at least one of the image display means and the sound alarm means with at least one of a frequency and a presentation form according to the attention drawing level set by the attention drawing level setting means of the stop predicting means.

The stop warning means may further comprise data storage means storing a plurality of different warning presentation data corresponding to a plurality of the different attention drawing levels, and data selection means for selecting the warning presentation data stored in the data storage means according to the attention drawing level set by the attention drawing level setting means.

The data storage means may store at least one of a plurality of different images of animals and a plurality of different cries of animals corresponding to the plurality of the different attention drawing levels; and the stop warning may be performed by at least one of the animal images or the animal cries selected by the data selection means.

The power generator may be formed by a fuel cell power generation system.

With a cogeneration system thus configured according to the present invention, it is possible to keep track of the operating state of the system automatically at all times, and to predict a stop of its cogeneration operation using the above-described reference patterns that conforms to the user's actual cycle of daily life. In addition, when a stop of the operation is predicted, it is possible to notify the user of the stop of the operation before the operation stops. Consequently, it is unnecessary for the user to monitor the operation of the system at all times, and it is possible to avoid an operation stop of the system and increase the operating ratio without intentionally and positively paying attention. This makes it possible to reduce the consumption of start-up energy associated with restarting of the system, and to effectively exhibit the merits of the cogeneration operational in terms of energy saving performance and economic efficiency. In particular, with a configuration in which the above-described reference patterns are prepared according to the actual uses of individual users, reference patterns that reflect individual users' cycles of daily life accurately can be obtained, and therefore, by performing a cogeneration operation using the prepared reference patterns, the energy saving performance and the economic efficiency can further be improved.

Moreover, particularly in the case where the stop warning not only notifies the user of an operation stop but also notifies the user to perform the act of using thermal energy, which is supposed to be carried out later than the predicted stop time of the operation, earlier than the predicted stop time in advance based on the reference patterns, effective utilization of waste heat is promoted if the user follows this notification and uses waste heat (thermal energy) earlier than the predicted stop time in advance. Thus, the operating ratio of the cogeneration further increases, and the energy saving performance and the economic efficiency also improve.

Furthermore, by employing a configuration in which the user himself/herself sets the user's attention drawing level to warning at a level that is suitable for himself/herself, the stop warning is carried out with a presentation style, a frequency, or the like that corresponds to the attention drawing level that has been set. Consequently, the user can, being more psychologically convinced, accept the stop warning more reliably. Thus, it is possible to improve the degree of utilization of the stop warning, further promoting effective utilization of waste heat.

In addition, particularly by performing the stop warning using a form of presentation that can be understood by the user instantly, reliable information transfer to the user is possible. Consequently, it becomes possible to promote effective utilization of waste heat more reliably.

The foregoing and other objects, features and advantages of the present invention will become more readily apparent from the following detailed description of preferred embodiments of the invention, with reference to the accompanying drawings.

BRIEF DESCRIPTION OF THE DRAWINGS

Fig. 1 is a functional block diagram schematically illustrating the configuration of a cogeneration system according to Embodiment 1 of the present invention;

Fig. 2 is a functional block diagram schematically illustrating the configuration of a waste heat utilization promoting system of the cogeneration system shown in Fig. 1;

Fig. 3 is a graph showing a reference pattern created regarding a change in the consumed power amount in one day with regard to the cogeneration system shown in Fig. 1;

Fig. 4 is a graph showing a reference pattern created regarding a change in the generated power amount in one day in the cogeneration system shown in Fig. 1;

Fig. 5 is a graph showing a reference pattern created regarding a change in the consumed thermal energy amount in one day with regard to the cogeneration system shown in Fig. 1;

Fig. 6 is a graph showing a reference pattern created regarding a change in the heat recovery amount in one day in the cogeneration system shown in Fig. 1;

Fig. 7 is a graph showing a change in the generated power amount of the cogeneration system shown in Fig. 1 in which a thermal energy utilization-promoting operation was performed;

Fig. 8 is a graph showing a change in the consumed thermal energy amount for the cogeneration system shown in Fig. 1 in which a thermal energy utilization-promoting operation was performed;

Fig. 9 is a graph showing a change in the heat recovery amount of the cogeneration system shown in Fig. 1 in which a thermal energy utilization-promoting operation was performed;

Fig. 10 is a flowchart showing the outline of a program stored in a central controller of the cogeneration system shown in Fig. 1;

Fig. 11 is a functional block diagram schematically illustrating the configuration of a cogeneration system according to a modified example of Embodiment 1 of the present invention;

Fig. 12 is a functional block diagram schematically illustrating the configuration of a characteristic portion of a cogeneration system according to Embodiment 3 of the present invention;

Fig. 13 is a functional block diagram schematically illustrating the configuration of a characteristic portion of a cogeneration system according to Embodiment 4 of the present invention;

Fig. 14 is a functional block diagram schematically illustrating the configuration of a characteristic portion of a cogeneration system according to Embodiment 5 of the present invention;

Fig. 15 is a flowchart schematically illustrating the content of a program stored in a control portion of a warning device of the cogeneration system shown in Fig. 14;

Fig. 16 is a schematic functional block diagram illustrating the configuration of a characteristic portion of a cogeneration system according to Embodiment 6 of the present invention;

Fig. 17 is a table showing the content of a selection menu for a method of waste heat utilization promotion, which is displayed on image display portions of a warning device and a portable information terminal of the cogeneration system of Fig. 16; and

Fig. 18 is a functional block diagram schematically illustrating the configuration of a conventional cogeneration system.

## DETAILED DESCRIPTION OF THE INVENTION

Hereinbelow, preferred embodiments of the present invention are described with reference to the drawings.

Embodiment 1

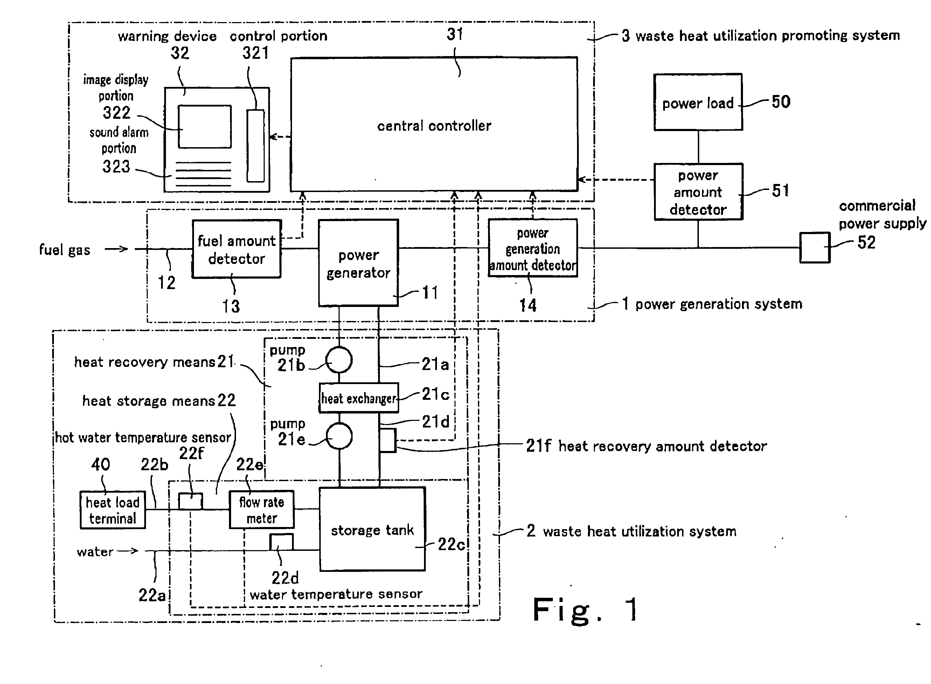

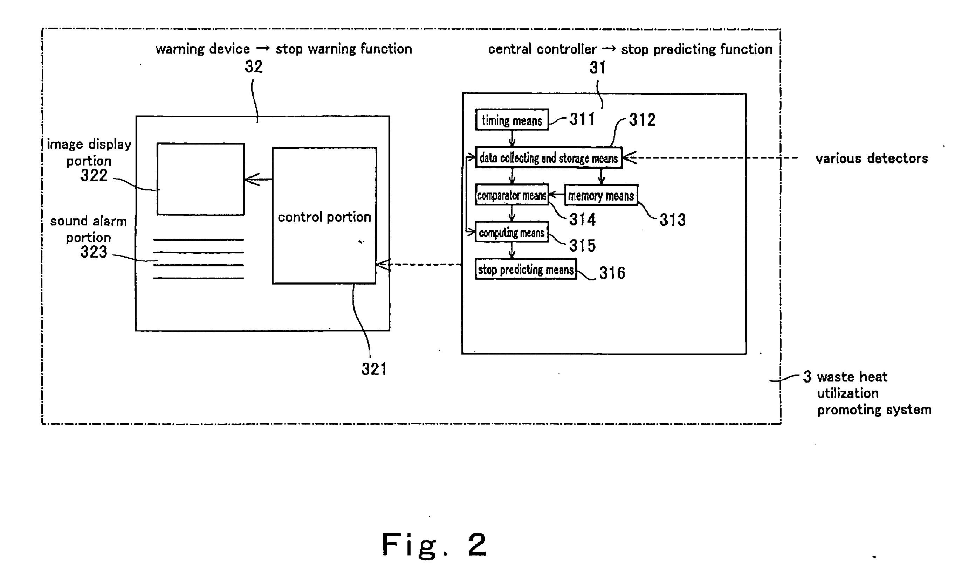

Fig. 1 is a functional block diagram schematically illustrating the configuration of a cogeneration system according to Embodiment 1 of the present invention. Fig. 2 is a functional block diagram schematically illustrating the detailed configuration of a central controller of the cogeneration system illustrated in Fig. 1.

As shown in Figs. 1 and 2, the cogeneration system comprises, in terms of its function, a power generation system 1, a waste heat utilization system 2, and a waste heat utilization promoting system 3.

The power generation system 1 is composed of a power generator 11, a fuel gas supply pipe 12 for supplying a fuel gas (city gas herein), which is a source material for electric power generation, to the power generator 11, and a power generation amount detector 14 for detecting a generated power amount in the power generator 11.

Here, the power generator 11 is composed of a fuel cell power generation system. The type of fuel cell used in the fuel cell power generation system is not limited, but for example, a polymer electrolyte fuel cell (hereinafter abbreviated as "PEFC") is used in this case. Although the description and graphical representation are omitted herein, the fuel cell power generation system equipped with a PEFC has a conventional system configuration. The fuel cell power generation system comprises hydrogen generating means for reforming the supplied fuel gas and generating a gas that is low in the CO concentration and abundant in hydrogen (hereinafter referred to as "power generation fuel gas"), and a PEFC that lets the power generation fuel gas and an oxidizer gas to react with each other and performs electric power generation. A fuel gas supply pipe 12, which is connected to the power generator 11, is furnished with a gas flowmeter which serves as a consumed fuel amount detector 13. In addition, the power generator 11 is configured so that the generated power is supplied to a power load 50. A commercial power supply 52 of an electric power company is interconnected to the power load 50 in addition to the cogeneration system, and a power meter or a power sensor serving as a consumed power amount detector 51 is provided to detect the consumed power amount in the power load 50.

The waste heat utilization system 2 is composed of a heat recovery means 21 and a heat storage means 22. The heat recovery means 21 comprises a cooling water circulating pipe 21a arranged so that cooling water passes through the power generator 11 and circulates around, a heat recovery pipe 21d configured to be capable of exchanging heat with the cooling water flowing through the cooling water circulating pipe 21a via a pump 21b and an heat exchanger 21c, which are provided at a mid portion of the pipe 21a, and a pump 21e and a heat recovery amount detector 21f, both of which are provided at a mid portion of the heat recovery pipe 21d. Although not illustrated in the figure here, the heat recovery amount detector 21f is composed of a temperature sensor for detecting the temperature of the cooling water supplied to the heat exchanger 21c and the temperature of the waste heat recovery water taken out from the heat exchanger 21c. The heat storage means 22 is composed of a storage tank 22c connected to the heat recovery pipe 21d, and a water supply pipe 22a and a hot water supply pipe 22b, both connected to the storage tank 22c. The hot water supply pipe 22b is further connected to a heat load terminal 40, which is a hot water supply terminal in a bathroom or a kitchen. The water supply pipe 22a is furnished with a water temperature sensor 22d, and the hot water supply pipe 22b is furnished with a flow rate meter 22e and a hot water temperature sensor 22f. As will be described later, the water temperature sensor 22d, the flow rate meter 22e, and the hot water temperature sensor 22f function as detectors for consumed thermal energy amounts.

The waste heat utilization promoting system 3 has a function to promote effective utilization of waste heat in the waste heat utilization system 2 (that is, to promote the effective output thermal energy amount) in order to avoid a stop of the cogeneration operation, and as shown in Fig. 2, it is composed of a central controller 31 having a stop predicting function and a warning device 32 having a stop warning function.

The central controller 31 is composed of a computer such as a microcomputer, and is equipped with a timing means 311, a data collecting and storage means 312, a memory means 313, a comparator means 314, a computing means 315, and a stop predicting means 316. These means 311 to 315 are realized by an operation in which a CPU reads out and executes programs stored in an internal memory (ROM and RAM) in the computer.

Meanwhile, the warning device 32 is equipped with a control portion 321, an image display portion 322, and a sound alarm portion 323. The control portion 321 is composed of a computer such as a microcomputer. The control portion 321 may be composed of the same computer as that of the central controller 31 or may be composed of another computer. The control portion 321 is configured to be capable of transferring the stop prediction information that is transferred from the stop predicting means 316 of the central controller 31. The image display portion 322 is configured to be capable of displaying an image corresponding to an image signal that is output from the control portion 321. The sound alarm portion 323 is configured to be capable of generating an alarm sound corresponding to a sound signal that is output from the control portion 321. For example, the image display portion 322 may be a television monitor or the like, and the sound alarm portion 323 may be composed of a loudspeaker or the like.

Next, an operation procedure of the cogeneration system with such a configuration are discussed.

During the operation of the cogeneration system, electric power generation is carried out in a fuel cell power generation system serving as the power generator 11. The power generating operation of the power generator 11 composed of a fuel cell power generation system equipped with a PEFC is similar to the power generating operation of the conventional fuel cell power generation system. Therefore, the detailed description is omitted. In this case, city gas is supplied through the fuel gas pipe 12 to a reforming portion of a hydrogen generating means of the fuel cell power generation system serving as the power generator 11 to perform a steam reforming reaction. Then, the reformed gas obtained by this reaction is treated by a CO reforming portion, a CO purifying portion, and the like to reduce its CO concentration. Thus, a power generation fuel gas that is abundant in hydrogen is produced. The power generation fuel gas thus produced is supplied to the fuel electrode side of the PEFC, and meanwhile, air is supplied as an oxidizer gas to the oxidizer electrode side of the PEFC. In the PEFC, the power generation fuel gas and the air that have been supplied react with each other, thereby generating electric power and a large amount of heat (waste heat). The electric power (electric energy) thus obtained by the power generator 11 is supplied to the power load 50 for use. It should be noted that when the consumed power amount by the power load 50 is greater than the generated power amount obtained by the power generator 11, the deficient portion of electric power is supplied from the commercial power supply 52 to the power load 50.

In such a power generating operation of the power generator 11, the flow rate of fuel gas (city gas) supplied to the power generator 11 is detected at all times by the consumed fuel amount detector 13. The power generation amount in the power generator 11 is also detected by the power generation amount detector 14 at all times. The consumed power amount in the power load 50 is also detected by the consumed power amount detector 51 at all times. Then, the detected information from the respective detectors 13, 14, and 51 is transferred to the data collecting and storage means 312 of the central controller 31 at all times.

Meanwhile, the waste heat generated in the power generator 11, which is associated with the electric power generation, is recovered by the heat recovery means 21 of the waste heat utilization system 2 and is thereafter supplied to the heat load terminal 40 by the heat storage means 22 as effective output thermal energy. Hereinbelow, the details of operation in the waste heat utilization system 2 are discussed.

First, in the heat recovery means 21, cooling water is pressurized by the pump 21b to pass through the power generator 11 via the cooling water circulating pipe 21a, whereby the waste heat of the power generator 11 is recovered by the cooling water. Subsequently, from the cooling water that retains the recovered waste heat, the waste heat is transferred to the heat exchanger 21c, and further, the waste heat is transferred from the heat exchanger 21c to the waste heat recovery water that flows through the heat recovery pipe 21d. Thus, heat exchange takes place between the cooling water and the waste heat recovery water through the heat exchanger 21c, and the waste heat recovery water is heated whereas the cooling water is cooled. The heated waste heat recovery water is returned to the storage tank 22c through the heat recovery pipe 21d, and again circulates through the heat recovery pipe 21d. In this way, the water in the storage tank 22c is heated by the recovered waste heat, turning into hot water.

In this case, in the heat storage means 22, water (city water herein) is supplied to the storage tank 22c through the water supply pipe 22d and at the same time stored in the tank, and this water is pressurized by the pump 21e and circulated within the heat recovery pipe 22d to recover waste heat as described above. The water (hot water) within the storage tank 22c that has been heated to a predetermined temperature by recovering the waste heat is supplied through the hot water supply pipe 22b to the heat load terminal 40, and the effective output thermal energy is used in the heat load terminal 40 for various uses. The uses of the effective output thermal energy in the heat load terminal 40 are not particularly limited; but the thermal energy may be used as hot water energy to a kitchen or a bathroom, as heating energy for additional heating for bath water, and as heating energy for floor heating, bathroom heating, bathroom drying, and the like.

Upon recovering and utilizing the waste heat in the waste heat utilization system 2, the amount of recovered waste heat is detected at all times by the heat recovery amount detector 21f, which is provided at a mid portion of the heat recovery pipe 21d. Further, the temperature of the supply water to the storage tank 22c is detected by the water temperature sensor 22d provided at a mid portion of the water supply pipe 22a also at all times. Further, the flow rate of the hot water taken out from the storage tank 22c is detected by the flow rate meter 22e provided at a mid portion of the hot water supply pipe 22b also at all times. Still further, the temperature of the hot water is detected by the hot water temperature sensor 22f provided in the hot water supply pipe 22b also at all times. The detected information from each of the detectors 21f, 22d, 22e, and 22f is transferred to the data collecting and storage means 312 of the central controller 31 at all times.

When the accumulated amount of the waste heat recovered in the waste heat utilization system 2 (hereinafter referred to as "heat storage amount") reaches a storage limit QM, the waste heat cannot be recovered any more. Specifically, when hot water with a predetermined temperature is stored in the storage tank 22c up to the storage limit of the tank (that is, the heat storage amount reaches a full amount), hot water cannot be produced any more or the temperature thereof cannot be increased any more. For this reason, the cogeneration operation cannot continue in this case, causing the system to stop. As described previously, when the cogeneration system temporarily stops, the energy efficiency as a whole reduces because additional energy is necessary to restart the system. In particular, in the cogeneration system equipped with a fuel cell power generation system having a PEFC as the power generator 11 as with the present embodiment, restarting the system requires a large amount of energy because it is necessary to heat the PEFC to a high temperature at which power generation is possible. In view of this, the cogeneration system of the present embodiment avoids an operation stop of the system with the waste heat utilization promoting system 3 in the following manner.

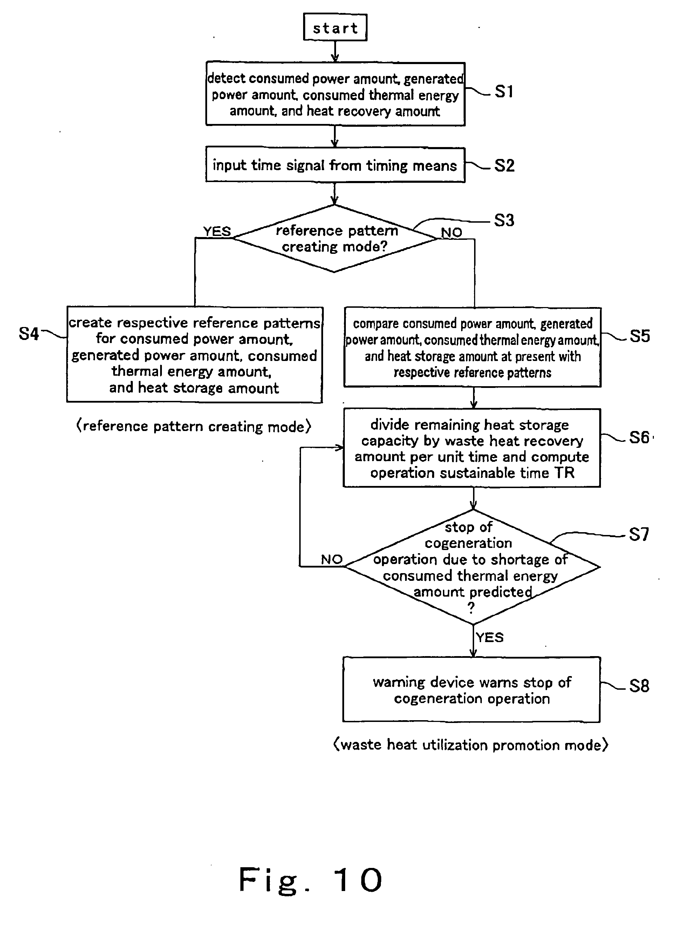

The waste heat utilization promoting system 3 has, as its primary functions, a function to create a reference pattern that is the criteria for performing stop prediction of the cogeneration operation (hereinafter referred to as a "reference pattern creating function"), a function to predict an operation stop by comparing the current operation status with the created reference pattern (hereinafter referred to as a "stop predicting function"), and a function to give a stop warning to the user to avoid the stop (hereinafter referred to as a "stop warning function"). These functions are realized by a configuration that is provided with the central controller 31 and the warning device 32, which constitute the waste heat utilization promoting system 3 (Fig. 2), and a program for realizing such functions is stored in the central controller 31. The cogeneration system is configured to be switchable between a reference pattern creating mode in which the reference pattern creating function is exhibited, and a waste heat utilization promoting mode in which the stop predicting function and the stop warning function are exhibited, and the switching between these modes is carried out by a mode switching operation portion (not shown) of the central controller 31. Fig. 10 is a flowchart schematically showing the content of the program stored in the central controller 31. Hereinbelow, the details of each of the functions of the waste heat utilization promoting system 3 and processes for realizing them are discussed.

First, the reference pattern creating function of the waste heat utilization promoting system 3 is described.

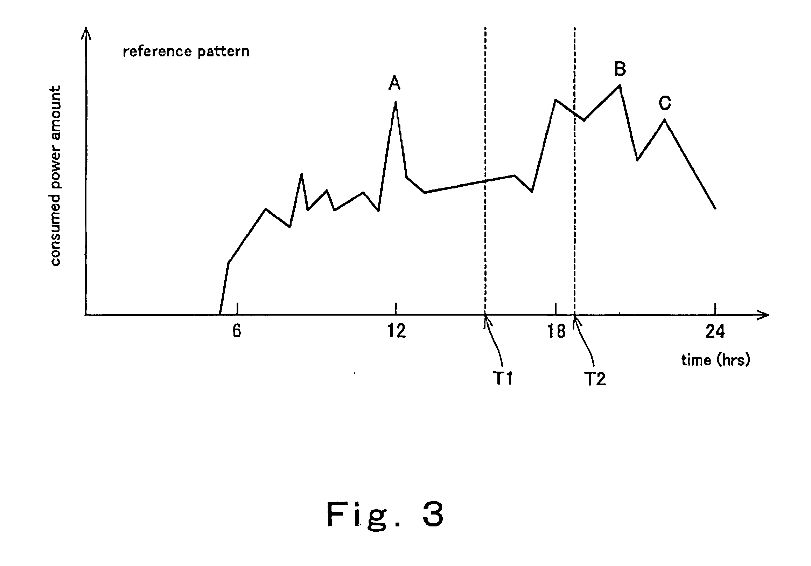

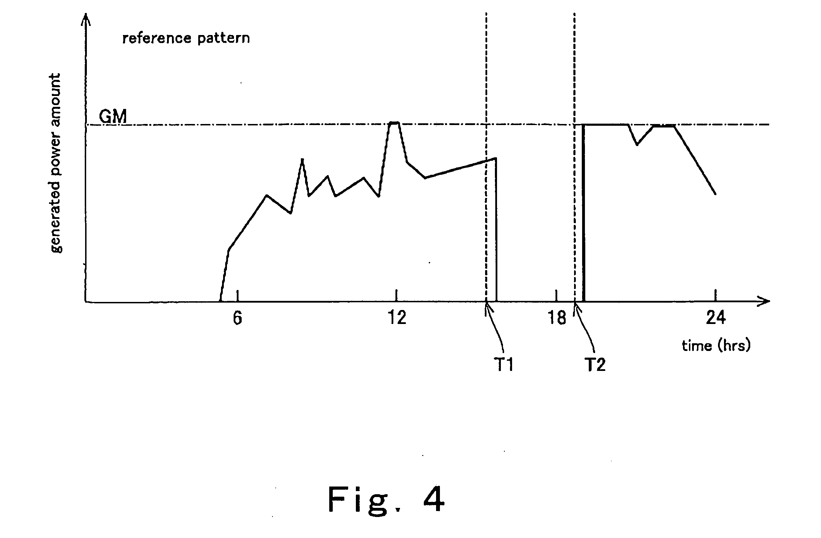

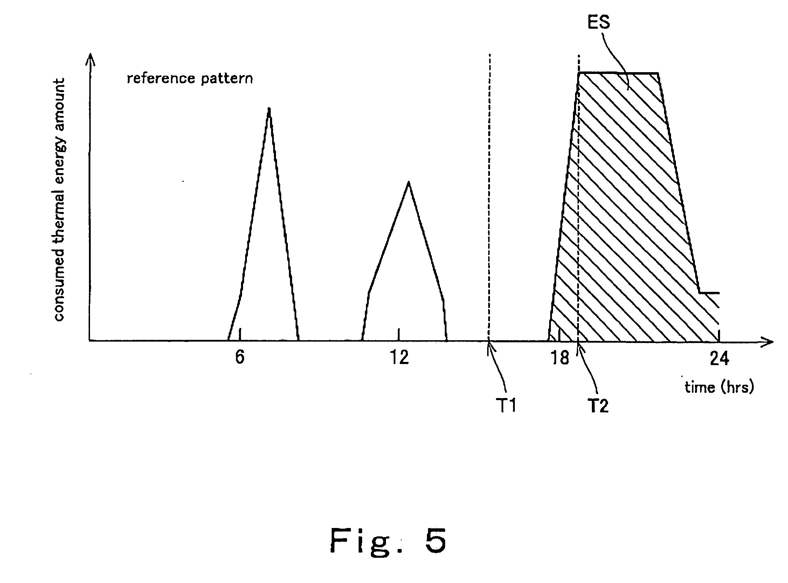

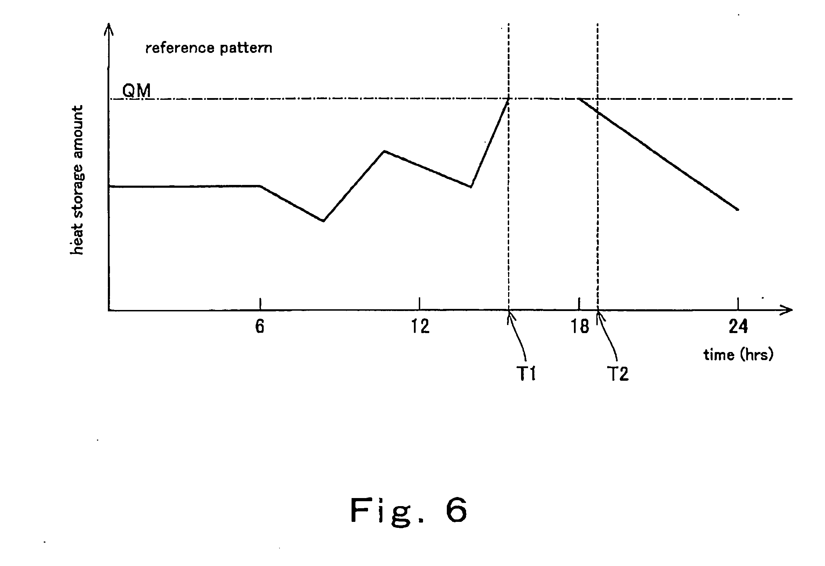

Fig. 3 shows a reference pattern of the change over time of the consumed power amount in the power load 50 in one day. Fig. 4 shows a reference pattern of the change over time of the generated power amount in the power generator 11 in one day. Fig. 5 shows a reference pattern of the change over time of the consumed thermal energy amount (effective output consumed thermal energy amount) in the heat load terminal 40 in one day. Fig. 6 shows a reference pattern of the change over time of the heat storage amount in the waste heat utilization system 2 in one day. Each of these reference patterns is created as follows. The user actually used the cogeneration system under the reference pattern creating mode to allow the cogeneration system to collect and accumulate data. Based on the accumulated data, the reference patterns were created.

Here, a creation process of the respective reference patterns of Figs. 3 to 6 under the reference pattern creating mode is as follows. For example, a change over time of the consumed power amount of the power load 50 in one day, a change over time of the generated power amount of the power generator 11 in one day, a change over time of the consumed thermal energy amount of the heat load terminal 40 in one day, and a change over time of the heat storage amount of the waste heat utilization system 2 in one day are detected every day over a predetermined period, all the data of which are to be stored in the data collecting and storage means 312 of the central controller 31. Then, a change pattern over time in one average day (i.e., a reference pattern) is acquired from the data obtained for a plurality of days in the predetermined period for each of the consumed power amount, the generated power amount, the consumed thermal energy amount, and the heat storage amount. It should be noted that the data collecting period for creating the reference patterns is not particularly limited as long as it is within a period by which the user's cycle of daily life can be kept track, and it may be, for example, one day to several days, one week to several weeks, one month to several months, or one year.

Specifically, first, the mode switching operation portion (not shown) is operated to turn the mode setting into the reference pattern creating mode, and then, the cogeneration system is started up as shown in Fig. 10. Accordingly, in the cogeneration system, the consumed power amount, the generated power amount, the consumed thermal energy amount, and the heat recovery amount are detected 24 hours continuously for a predetermined period (step S1). Here, the power generation amount detector 14 detects the generated power amount, the consumed power amount detector 51 detects the consumed power amount, and the heat recovery amount detector 21f detects the heat recovery amount. In addition, in order to calculate the consumed thermal energy amount, the temperature of the supply water to the storage tank 22c is detected by the water temperature sensor 22d, the hot water flow rate is detected by the flow rate meter 22e, and the hot water temperature is detected by the hot water temperature sensor 22f. The information thus detected by each of the detectors 22d, 22e, and 22f is transferred to the data collecting and storage means 312 of the central controller 31, The water temperature information, the hot water flow rate information, and the hot water temperature information that have been transferred to the data collecting and storage means 312 are further transferred to the computing means 315 and subjected to arithmetic processing by the computing means 315. Thereby, the consumed thermal energy amount is calculated. The consumed thermal energy amount thus calculated is transferred to the data collecting and storage means 312. The heat recovery amount transferred to the data collecting and storage means 312 is further transferred to the computing means 315, where the foregoing calculated heat consumed amount is subtracted from the heat recovery amount to obtain a heat storage amount. The heat storage amount thus calculated is transferred to the data collecting and storage means 312.

Here, in collecting data of the consumed power amount, the generated power amount, the heat storage amount, and the consumed thermal energy amount in the foregoing step S1, the detections are performed by the above-noted detectors, and at the same time, the time of each of the detections is measured by the timing means 311. Then, a time signal is input from the timing means 311 to the data collecting and storage means 312 along with the data of each of the detected amounts (step S2). Here, a clock of the microcomputer is used for measuring time by the timing means 311.

When the reference pattern creating mode is selected according to the input information that has been input into the mode switching operation portion (not shown) (step S3), the data of the consumed power amount, the generated power amount, the consumed thermal energy amount, and the heat storage amount, which have been collected in the data collecting and storage means 312, are stored in the memory means 313 together with the input time signal. Thereby, respective reference patterns of the consumed power amount, the generated power amount, the consumed thermal energy amount, and the heat storage amount (Figs. 3, 4, 5, and 6) are created (step S4). It should be noted that the respective reference patterns are stored as respective numerical value data in the memory means 313, and Figs. 3 to 6 show graphs of the numerical value data.

Each of the reference patterns created in the above-described manner is created based on the user's actual use and therefore reflects the cycle of daily life of each user who uses the system. Also, in order to reflect the user's cycle of daily life more accurately, it is possible to employ a configuration in which a reference pattern corresponding to weekdays and a reference pattern corresponding to holidays may be created respectively, taking into consideration the fact that a difference arises in the change patterns of the consumed power amount and the consumed thermal energy amount with the user's cycle of daily life between, for example, weekdays and holidays, and the reference patterns for weekdays and holidays are appropriately selected (switched) and applied to the cogeneration operation. Further, taking into consideration the fact that the consumed power amount and the consumed thermal energy amount fluctuate depending on seasons, for example, it is possible to employ a configuration in which reference patterns corresponding to seasons are created and a corresponding reference pattern is appropriately selected (switched) according to the season in which the system is used, or to employ a configuration in which the reference pattern is updated for each season.

Next, the created reference patterns of Fig. 3 to Fig. 6 are described.

As shown in Fig. 3, the reference pattern of the consumed power amount in the power load 50 is 0 from about 0:00 hours to about 6:00 hours, during which the user is asleep, starts to increase from about 6:00 hours, at which the user wakes up and starts activities, and reaches a first peak A at about 12:00 hours. Meanwhile, as shown in Fig. 4, the generated power amount fluctuates according to such a fluctuation of the consumed power in the power generator 11. Specifically, power generation stops and the generated power is 0 from about 0:00 hours to about 6:00 hours; thereafter, the generated power increases and reaches the maximum generated power GM at about 12:00 hours. Here, since the consumed power amount at the peak A exceeds the maximum generated power GM of the power generator 11, the generated power of the power generator 11 only is insufficient to cover all the consumed power. For this reason, in addition to the power generation by the power generator 11, electric power is supplied from the commercial power supply 52 at the peak A of the consumed power amount. After the peak A, the consumed power amount decreases and thereafter undergoes a gradual change until about 17:00 hours. In the power generator 11, the generated power amount undergoes a gradual change so as to correspond to the tendency of the consumed power amount until time T1.

Meanwhile, the waste heat generated along with the electric power generation of the power generator 11 is recovered by the heat recovery means 21 of the waste heat utilization system 2, and thereby, the heat storage amount undergoes a change as shown in Fig. 6. Specifically, the heat storage amount is retained at a constant amount during the time from about 0:00 hours to about 6:00 hours (Figs. 5 and 4), in which thermal energy is not used in the heat load terminal 40 and the power generating operation is stopped (specifically, hot water with a predetermined temperature is held in the storage tank 22c at a predetermined amount). Then, when thermal energy is used from about 6:00 hours to about 8:00 hours (Fig. 5), the heat storage amount decreases according to the fluctuation of the consumed amount of the thermal energy (Fig. 6). During the time from about 8:00 hours to about 10:00 hours, in which the consumed amount of thermal energy becomes 0 again (Fig. 5), the power generator 11 carries out electric power generation as described above (Fig. 4), and the heat storage amount increases (Fig. 6). Then, when thermal energy is used again from about 10:00 hours to about 14:00 hours (Fig. 5), the heat storage amount decreases according to the fluctuation of the consumed thermal energy amount (Fig. 6). After 14:00 hours, in which the consumed amount of thermal energy becomes 0 again (Fig. 5), the recovered waste heat is unused and accumulated, and after a while, the heat storage amount reaches the heat storage limit QM at time T1 (Fig. 6). Specifically, the state in which the heat storage amount has reached the heat storage limit QM means a state in which hot water with a predetermined elevated temperature is stored to the full amount (heat storage limit) of the storage tank 22c so that no more temperature elevation or water supplying cannot be performed. In such a state, no more waste heat cannot be recovered. Therefore, when the heat storage amount reaches the heat storage limit QM, the cogeneration system automatically stops. During the time in which the cogeneration system stops, the power generator 11 does not perform electric power generation and the generated power amount results in 0 (Fig. 4). Consequently, the consumed power during this period is supplied entirely by the commercial power supply 52. It should be noted that a stop of the system's operation at time T1 means that an operation stop instruction is input to the system. As shown in Fig. 4, the reason why the time at which the generated power amount result in 0 shifts later than time T1 is that even though the stop instruction is input to the system at time T1, it takes a certain period of time until the system operation actually stops.

When the use of thermal energy starts again at about 18:00 hours (Fig. 5), the waste heat, which has been stored up to the heat storage limit QM, is used and the stored amount of the waste heat becomes lower than the heat storage limit QM. Consequently, heat recovery becomes possible again, and the operation of the system resumes. Here, at time T2, an operation starting instruction is input into the cogeneration system to restart the system as shown in Fig. 6, and accordingly, electric power is generated by a power generating operation (Fig. 4). It should be noted that the reason why the resumption of the electric power generation shifts later than time T2 as shown in Fig. 4 is that even though the operation restarting instruction is input to the system at time T2, it takes a certain period of time until the system actually becomes ready to perform power generation.

As shown in Figs. 3 and 5, between 18:00 hours and 24:00 hours, the consumed amounts of electric power and thermal energy are the greatest in a day, and the generated power amount accordingly becomes maximum. When the consumed power amount reaches a peak B and a peak C, the consumed power amount cannot be supplied enough even at the maximum generated power GM, and therefore, electric power is supplied from the commercial power supply 52 (Fig. 4). Also, although the waste heat amount that can be recovered increases along with the active power generating operation from 18:00 hours to 24:00 hours, the heat storage amount decreases as a whole because the consumed amount of thermal energy also becomes maximum in this period (Fig. 6).

With the above-noted reference patterns in the cogeneration operation, the energy efficiency of the cogeneration system reduces from time T1 to time T2 because the operation is temporarily stopped in that period, as described above. Moreover, during this stop period T1-T2, electric power and thermal energy must be supplied by other means than the cogeneration system, and therefore, the economic efficiency and the energy saving performance degrade. In view of this, the cogeneration system of the present embodiment avoids, using these stored reference patterns, the operation stop of the system as much as possible to effectively utilize the system by means of the stop predicting function and the stop warning function of the waste heat utilization promoting system 3 in the waste heat utilization promoting mode.

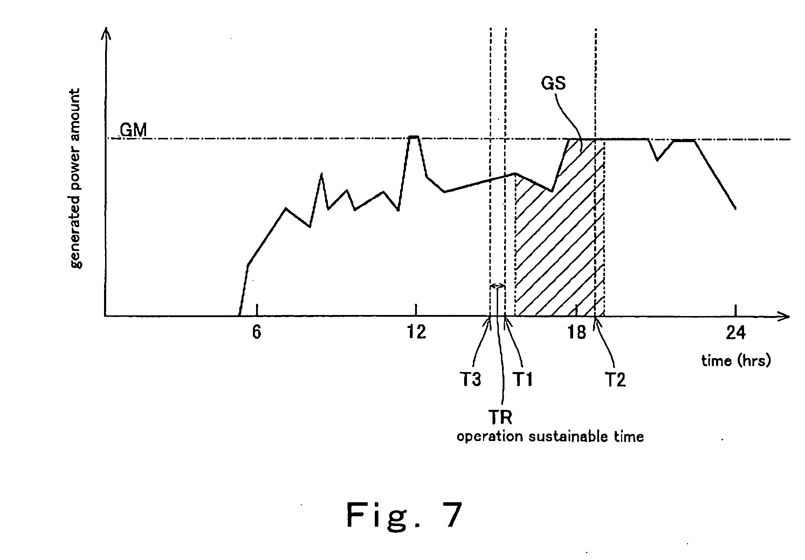

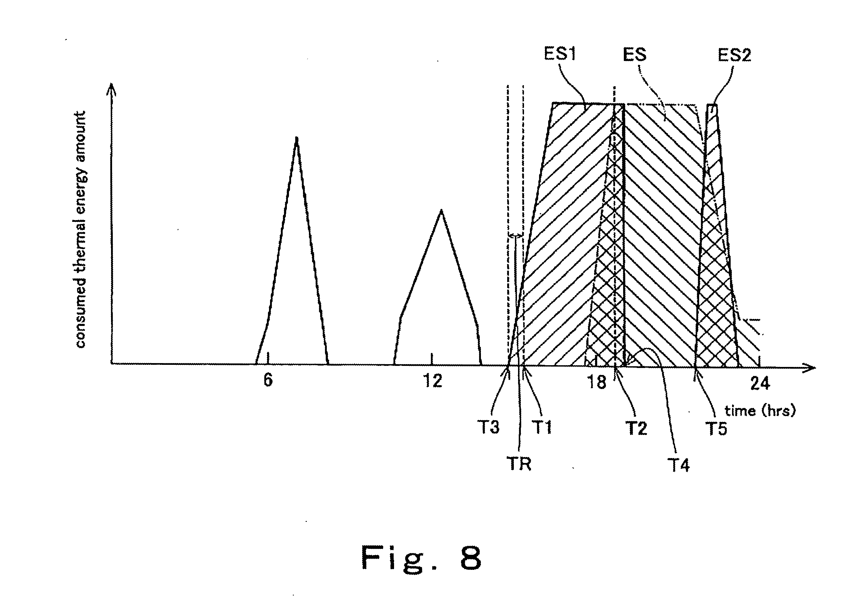

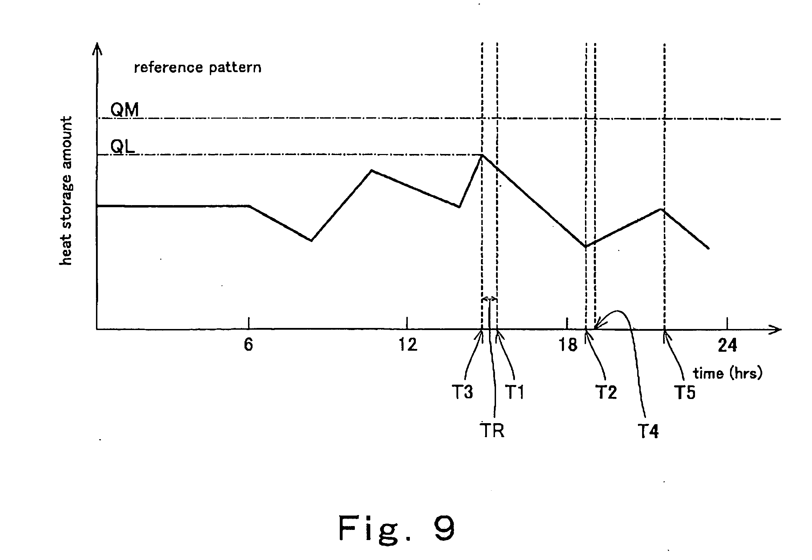

Figs. 7 to 9 are views for illustrating operations of the cogeneration system in which the stop avoidance is attempted; Fig. 7 is a view showing a change over time of the generated power amount in one day in such an operation, Fig. 8 is a view showing a change over time of the consumed thermal energy amount in one day in such an operation, and Fig. 9 is a view showing a change over time of the heat storage amount in one day in such an operation. The process of such an operation will be described with reference to Fig. 10.

It should be noted that the description is made herein with an assumption that the user spends substantially the same one-day life cycle as that in which the reference patterns were created.

Upon starting the operation of the cogeneration system, first, the mode switching operation portion (not shown) is operated to set the operation mode to be the waste heat utilization promoting mode. Then, as shown in Fig. 10, the consumed power amount, the generated power amount, the heat recovery amount, and the consumed thermal energy amount are detected in the same manner as in creating the reference patterns as described above; and the information is transferred to the data collecting and storage means 312 of the central controller 31 (step S1). In addition, a time signal is transferred by the timing means 311 to the data collecting and storage means 312 along with the information (step S2).

Subsequently, if the waste heat utilization promoting mode is selected (step S3) according to the input information that has been input to the mode switching operation portion (not shown), the comparator means 314 (Fig. 2) of the central controller 31 compares the changes over time, which have been detected in the current operation status, of the consumed power amount and the consumed thermal energy amount as well as of the generated power amount and the heat storage amount with the above-noted respective reference patterns (Figs. 3 to 6) stored in the memory means 313, using the data collected in the data collecting and storage means 312 (step S5). Then, the computing means 315 (Fig. 2) computes how much length of period the operation can continue from the present moment in the case where it is assumed that thermal energy is not used, that is, computes a operation sustainable time TR, by dividing a remaining heat storage capacity (specifically, the difference between the heat storage limit QM and the current heat storage amount at the present moment) by a heat recovery amount per unit time at the present moment in the case where the consumed thermal energy amount is assumed to be 0 (step S6).

Then, the result of the comparison with the reference patterns and the result of the calculation of the operation sustainable time TR are transferred to the stop predicting means 316 (Fig. 2), and based on this information, the stop predicting means 316 judges whether or not the heat storage amount reaches the heat storage limit QM and the system stops if the operation is continued under the current condition (that is, performs a stop prediction) (step S7). If the operation stop is not predicted according to the judgment of the stop predicting means 316, the operation is continued uninterruptedly. On the other hand, if an operation stop is predicted, the stop warning function of the waste heat utilization promoting system 3 subsequently comes into operation.

For example, as shown in Fig. 9, when the heat storage amount reaches a predetermined amount QL (specifically, when the hot water within the storage tank 22c reaches a predetermined water level) at time T3, the stop predicting means 316 judges that the heat storage amount reaches the heat storage limit QM at time T1 at which an operation sustainable time TR has elapsed from the current time T3 and then the operation stops, by the operation of the above-described steps S4 to S6 of the central controller 31. Consequently, the stop prediction information obtained by the stop predicting means 316 of the central controller 31 is transferred to the control portion 321 of the warning device 32 in the waste heat utilization promoting system 3, as shown in Fig. 2. Then, based on this information, the control portion 321 outputs an image signal such as to display an image for warning an operation stop to the image display portion 322, and a sound signal such as to emit alarm sound for warning an operation stop to the sound alarm portion 323. As a consequence, at time T3, a stop warning image is displayed on the image display portion 322 of the warning device 32, and an alarm sound for stop warning is emitted from the sound alarm portion 323 (step S8 in Fig. 10). Herein, for example, warning messages and the operation sustainable time TR are displayed on the image display portion 322 and alarm buzzer sound is emitted from the sound alarm portion 323, whereby the user's attention is drawn.

The user selects whether or not to promote the waste heat utilization after the warning device 32 has given the stop warning and while the cogeneration system keeps operating (that is, within a period T3-T1, which is from the time T3 to the time at which the operation sustainable time TR has elapsed). For example, the user's attention to an operation stop of the system is drawn by the user's hearing the alarm sound emitted from the warning device 32. Then, according to the judgment made by the user himself/herself, the user selects a predetermined heat use to be executed before the operation stop of the system due to the heat storage amount reaching the heat storage limit QM, in order to avoid an operation stop of the system. For example, thermal energy ES1, which is a portion of thermal energy ES that is planned to be used from 18:00 hours to 24:00 hours according to the reference pattern of Fig. 5 stored in the memory means 313, is used in advance from time T3, which is earlier than 18:00 hours, to time T4. The uses of the thermal energy ES1 that is used in advance are not particularly limited, and they may be used for filling hot water into a bathtub (to fill the bathtub with hot water) or the like, which is planned to be carried out after 18:00 hours according to the reference pattern.

As shown in Fig. 9, by using the thermal energy ES1 from time T3 toward time T4 (hereinafter referred to as "thermal energy utilization promotion"), the heat storage amount does not reach the heat storage limit QM even at time T1, at which an operation stop has been predicted, and thereby, the operation of the system continues even in a period T1-T2, the period from time T1 to time T2, in which the operation should stop according to the reference pattern.

As shown in Fig. 8, after the thermal energy amount ES1 is used from time T3 to time T4, the consumed amount of thermal energy returns to 0 again until time T5. However, since the heat storage amount has decreased greatly from the heat storage limit QM due to the use of the thermal energy amount ES1 (Fig. 9), heat recovery is possible during the period T4-T5 even if the consumed thermal energy amount is 0 during this period. Therefore, the operation of the system continues. Then, a thermal energy amount ES2 is used again after time T5. This consumed thermal energy amount ES2 corresponds to a portion of the consumed thermal energy amount ES, which is to be used from about 18:00 hours to about 24:00 hours according to the reference pattern of Fig. 5, and the total of the consumed thermal energy amount ES2 and the consumed thermal energy amount ES1 is equal to the consumed thermal energy amount ES.

Such a thermal energy utilization promotion makes possible a continuous operation of the cogeneration system, and therefore, as shown in Fig. 7, it becomes possible to generate electric power by the cogeneration system and obtain the generated power GS even in a period T1-T2 that is from time T1 to time T2, that is, in a period in which electric power needs to be provided entirely by the commercial power supply 52 according to the reference patterns. Taking into account the fact that the consumed power amount is greatest in a day after 18:00 hours, it is effective to supply electric power by the cogeneration system during the period T1-T2. Moreover, since the waste heat accompanied by the electric power generation in the period T1-T2 can be used as thermal energy, it becomes possible to stably supply thermal energy from the cogeneration system after 18:00 hours, in which the consumed thermal energy amount is greatest in one day. Furthermore, the operating ratio of the cogeneration system becomes high, making it possible to suppress the energy consumption required for restarting the system.

Thus, the cogeneration system that performs waste heat utilization promotion improves economic efficiency and energy saving performance. Moreover, in this case, the cogeneration system automatically predicts an operation stop and gives the user warning to call attention; therefore, the waste heat utilization promotion is easily feasible even when the user does not pay particular attention, such as by monitoring the operating state of the system constantly. Furthermore, the system with such a configuration can be realized easily without greatly modifying the configuration of conventional cogeneration system.

It should be noted that when the user does not perform the waste heat utilization promotion intentionally while he/she has recognized an operation stop warning, the heat recovery amount reaches the heat storage limit QM and the cogeneration system stops, as described previously about the reference pattern of Fig. 6. The user can arbitrarily select whether or not to perform the waste heat utilization promotion depending on the situation at that time, and the utilization is not compulsory. Even if the user does not make the selection, the foregoing advantageous effect can be obtained with such a configuration because the number of times of operation stop of the system can be reduced than the conventional configuration.

Further, although the foregoing has described the case in which a portion ES1 of the thermal energy ES that is to be used after 18:00 hours according to the reference pattern (Fig. 5) is used in advance for the waste heat utilization promotion, it is possible to use all the thermal energy ES in advance.

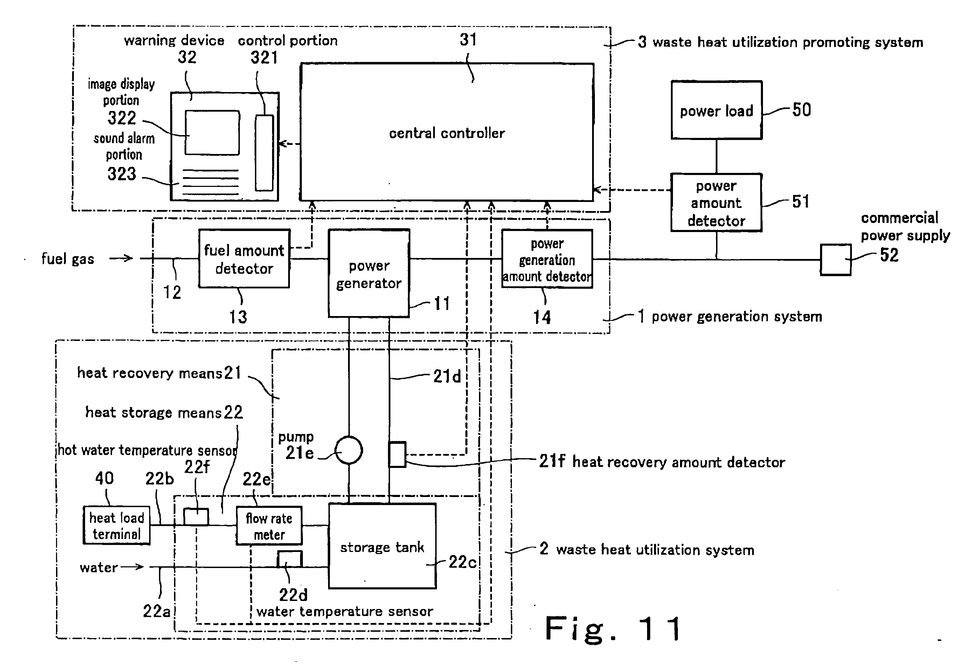

Moreover, as a modified example of the present embodiment, the cogeneration system may have a configuration as illustrated in Fig. 11. As shown in Fig. 11, a cogeneration system according to the present example has the same configuration as that of the system of Fig. 1, but the configuration of the heat recovery means 21 is different from that in the system of Fig. 1.

Specifically, in the cogeneration system of the present example, the heat recovery means 21 is composed of a heat recovery pipe 21d that directly connects the storage tank 22c to the power generator 11 and a pump 21e provided at a mid portion of the heat recovery pipe 21d. Neither the cooling water circulating pipe 21a nor the heat exchanger 21c as in Embodiment 1 is provided. With such a configuration, the water in the storage tank 22c that passes through the power generator 11 via the heat recovery pipe 21d carries out directly heat exchange with the power generator 11. Thereby, the waste heat of the power generator 11 is recovered. This water is heated and turned into hot water, which serves for hot water supply. The cogeneration system with such a configuration can also attain the same advantageous effects as the foregoing advantageous effects in the system of Fig. 1.

Embodiment 2

A cogeneration system according to Embodiment 2 of the present invention has the same configuration as that of the cogeneration system of Embodiment 1 and is operated in the same manner as Embodiment 1; however, it differs from Embodiment 1 in the following points.

Specifically, in the cogeneration system of the present embodiment, the image display portion 322 and the sound alarm portion 323 of the warning device 32 give a stop warning when an operation stop of the system is predicted at time T3, as in Embodiment 1, but the stop warning by an image display and an alarm sound generation are repeated during a period from time T3 to the predicted stop time T1, that is, during a period T3-T1, in which an operation sustainable time TR elapses from time T3. For example, the stop warning is carried out repeatedly during the operation sustainable time TR at predetermined time intervals. This increases the degree of calling user's attention to the operation stop. As a result, the user is less likely to miss the opportunity to select whether or not to perform the waste heat utilization promotion as above-described in Embodiment 1 in the period T3-T1, the period in which the operation sustainable time TR elapses from time T3, and it becomes possible to make this selection more reliably.

Embodiment 3

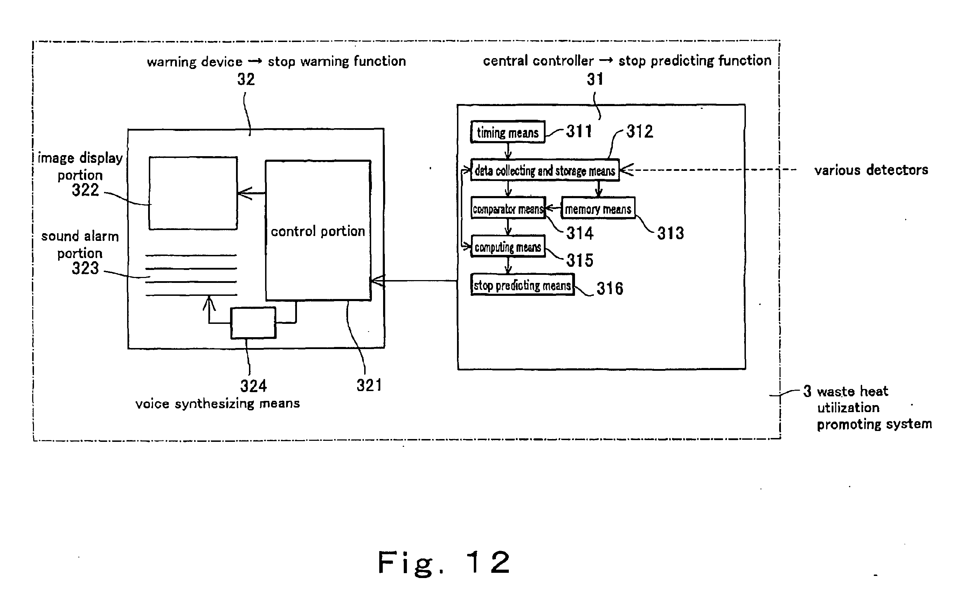

Fig. 12 is a functional block diagram schematically illustrating the configuration of a characteristic portion of a cogeneration system according to Embodiment 3 of the present invention. The cogeneration system according to the present embodiment has the same configuration as that of the system of Embodiment 1 except that the warning device has a configuration as shown in Fig. 12. In the present embodiment, the cogeneration system operates in the same manner as in Embodiment 1, but the following points are different from Embodiment 1.

In the warning device 32 in the cogeneration system of the present embodiment, the control portion 321 further comprises a voice synthesizing means 324. When giving an operation stop warning, this warning device 32 not only makes a buzzer alarm sound as in the case of Embodiment 1 but also lets out voice advice that suggests a specific waste heat utilization promotion from the sound alarm portion 323.

With this system, when stop prediction information is transferred from the stop predicting means 316 of the central controller 31 to the control portion 321 of the warning device 32, a voice synthesizing signal is output from the control portion 321 to the voice synthesizing means 324 to synthesize a voice. Then, voice advice is let out from the sound alarm portion 323, such as "Hot water will fill up the tank soon and the cogeneration system will stops the operation. How about filling the bathtub with hot water?" or "Hot water will fill up the tank soon and the cogeneration system will stops the operation. How about taking a bath?" At this time, a buzzer alarm sound as in Embodiment 1 may be emitted at the same time. With this voice advice, the user's attention is drawn to an operation stop, and a specific method for promoting waste heat utilization is suggested (notified) to the user. Therefore, bearing this suggestion in mind, the user uses waste heat before an operation stop of the system due to the heat storage amount reaching the heat storage limit QM as above-described in Embodiment 1. It should be noted that the user does not always need to follow the method suggested by the voice advice, and may either select the use of thermal energy for waste heat utilization promotion or deny the use of the utilization promotion according to the situation at the time appropriately.

Although the content of the utilization promotion method (that is, the uses of thermal energy for utilization promotion) that is suggested by the voice advice is not particularly limited, it is preferable that the suggestion should reflect the user's cycle of daily life and, in particular, a suggestion should be also made such as to perform a thermal energy utilization action that is expected to happen later in the user's cycle of daily life in advance. Herein, for example, a suggestion is made such as to perform the uses of thermal energy from 18:00 hours to 24:00 hours (specifically, filling the bathtub with hot water, bathing or the like) in advance; such a suggestion is effective because it reflects the user's actual cycle of daily life and therefore the user is highly likely to perform such activities and tends to easily follow the suggestion.

As described above, in the present embodiment, a specific method of waste heat utilization promotion can be suggested by voice advice in an expression that is easily understood by the user, and therefore, the waste heat utilization promotion can be performed more easily and reliably. Consequently, the operating ratio of the cogeneration system further increase, improving the economic efficiency and the energy saving performance further.

Embodiment 4

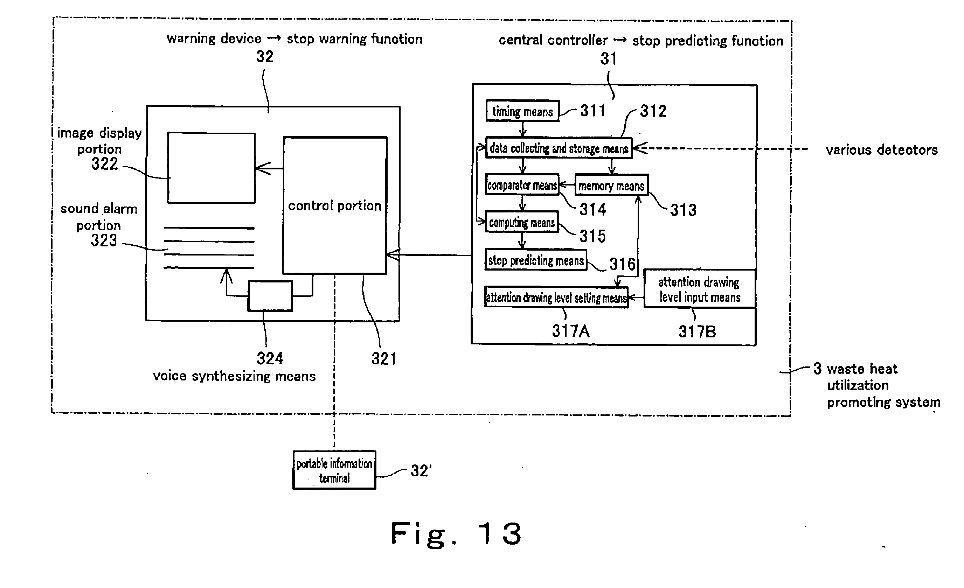

Fig. 13 is a functional block diagram schematically illustrating the configuration of a characteristic portion of a cogeneration system according to Embodiment 4 of the present invention. The cogeneration system of the present embodiment has the same configuration as that of Embodiment 3, except that the central controller has a configuration as illustrated in Fig. 13. The cogeneration system of the present embodiment operates in the same manner as Embodiment 3, but the following points are different from Embodiment 3.

In the cogeneration system of the present embodiment, the central controller 31 further comprises an attention drawing level setting means 317A and an attention drawing level input portion 317B, and the warning device 32 further comprises a portable information terminal 32'.

The attention drawing level setting means 317A and the attention drawing level input portion 317B are for inputting and setting the optimum condition for performing a warning at the operation stop of the system warning so that user's attention can be drawn effectively according to individual users. For example, the degree of users' interests to be paid (in other words, attention to be drawn) to the warning during the operation sustainable time TR varies depending on how often the warning is given, or in what kind of presentation form (specifically, types of display images or sounds) the warning is given. Further, the degree of attention to be paid varies from one user to another. In view of this, when the user inputs the attention drawing level that is most suitable for himself/herself, the conditions for performing a warning can be set to be the optimum conditions for individual users. The attention drawing level input portion 317B is, for example, composed of an input device to a computer, such as a keyboard and a mouse.

When the user inputs an attention drawing level from the attention drawing level input portion 317B to the attention drawing level setting means 317A, the input attention drawing level is stored in the memory means 313, and thereby the attention drawing level is set. The attention drawing level thus set is transferred to the control portion 321 of the warning device 32 along with the stop prediction information from the stop predicting means 316. The control portion 321 controls the image display portion 322 and the sound alarm portion 323 so as to give a warning, for example, at a frequency according to the transferred attention drawing level.

For example, the user inputs a strong level from the attention drawing level input portion 317B to the attention drawing level setting means 317A in such cases where a warning is given repeatedly to draw user's attention positively and reliably in order to perform the waste heat utilization promotion reliably, or where user's attention cannot be drawn unless a warning is performed repeatedly. Accordingly, the strong level is set, and the strong level thus set is transferred to the control portion 321 of the warning device 32 along with the stop prediction information from the stop predicting means 316. Then, the control portion 321 controls the image display portion 322 and the sound alarm portion 323 to increase the frequency of warning.

On the other hand, in such cases where user's attention can be drawn even without giving a warning repeatedly, the user inputs a weak level from the attention drawing level input portion 317B to the attention drawing level setting means 317A. Accordingly, the weak level is set, and the weak level thus set is transferred to the control portion 321 of the warning device 32 along with the stop prediction information from the stop predicting means 316. Then, the control portion 321 controls the image display portion 322 and the sound alarm portion 323 so as to reduce the frequency of the warning.

Furthermore, in the present embodiment, the warning device 32 is provided with the portable information terminal 32'. Consequently, the user can receive a stop warning. reliably by carrying the portable information terminal 32' even when he/she is away from the warning device 32. For example, the portable information terminal 32' is a remote controller equipped with a communication portion (transmitter/receiver portion) as well as an image display portion and a sound alarm portion (both of which are not shown), and likewise, the warning device 32 is also equipped with a communication portion (not shown). The operation of the portable information terminal 32' is controlled by the control portion 321 via the communication portions of the portable information terminal 32' and the warning device 32. By an instruction from the control portion 321 of the warning device 32, the portable information terminal 32' displays an image for giving a warning of an operation stop on the image display portion and emits an alarm sound and voice advice from the sound alarm portion. In such a warning operation in the portable information terminal 32', the warning operation is performed according to the attention drawing level that has been input to the attention drawing level input portion 317B of the central controller 31 in the same way as the warning operation of the warning device 32 as described above.

According to the configuration of the present embodiment, advantageous effects similar to the effects described in Embodiment 3 above can be obtained. Moreover, in this embodiment, the warning can be given with the optimum condition according to individual users and the warning can be received reliably regardless of the place where the user is. Consequently, the selection of waste heat utilization promotion can be made more reliably. Furthermore, since the warning is given according to the attention drawing level that is set by the user himself/herself, the user tends to accept the warning with psychological assurance.

It should be noted that although the foregoing has described a case in which the warning device 32 gives both an operation stop warning and a suggestion on the method of the waste heat utilization promotion, the present embodiment is also applicable to the cases in which the suggestion on the method of the waste heat utilization promotion is not made, as Embodiments 1 and 2.

Embodiment 5

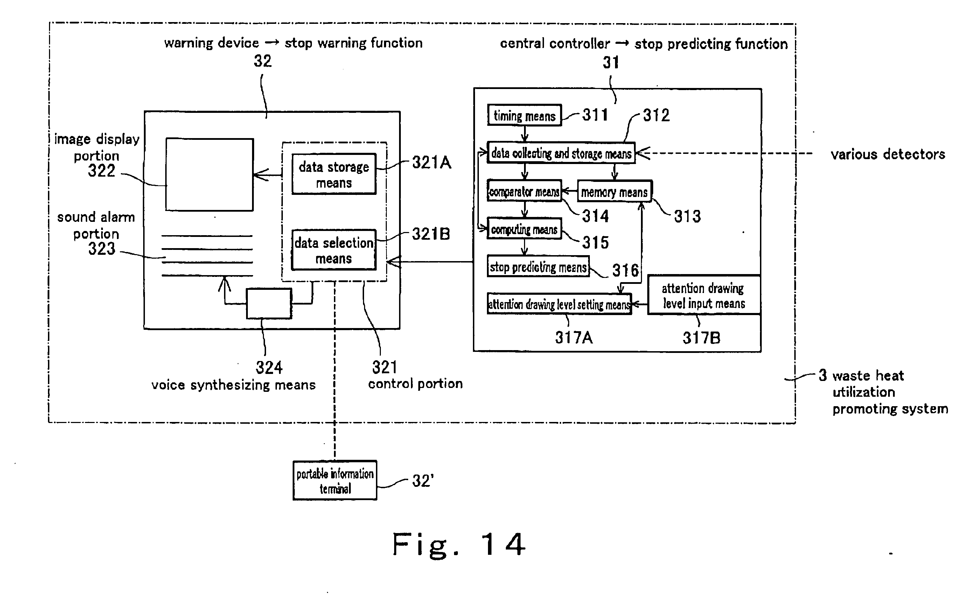

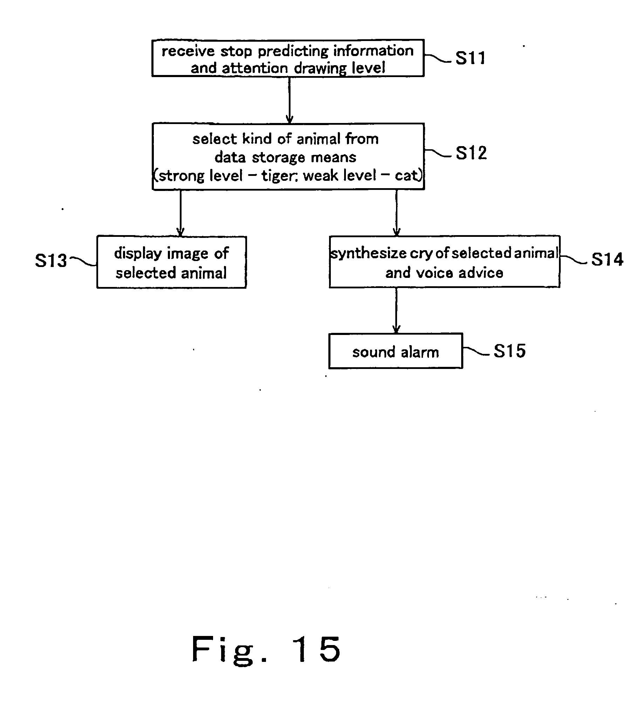

Fig. 14 is a functional block diagram schematically illustrating the configuration of a characteristic portion of a cogeneration system according to Embodiment 5 of the present invention. Fig. 15 is a flowchart schematically illustrating the content of a program stored in the control portion of the warning device for implementing a characteristic operation of the cogeneration system shown in Fig. 14.

The cogeneration system of the present embodiment has the same configuration as that of Embodiment 4, except that the warning device 32 has a configuration as illustrated in Fig. 14. The cogeneration system of the present embodiment operates in the same manner as in Embodiment 4, but the following points are different from Embodiment 4.

As shown in Figs. 14 and 15, in the cogeneration system of the present embodiment, the control portion 321 of the warning device 32 further comprises a data storage means 321A and a data selection means 321B. With such a system, according to an attention drawing level set by the attention drawing level setting means 317A, images are displayed on the image display portion 322 of the warning device 32 and on the portable information terminal 32' and alarm sound and voice advice are emitted from the sound alarm portion 323 in a similar manner to that in Embodiment 4. In particular, an image of an animal is displayed on the image display portion 322 of the warning device 32 and the portable information terminal 32' so that a stop warning is instantly recognized by the user. In addition, a cry of the animal is emitted from the sound alarm portion 323 as an alarm sound, and at the same time, a suggestion by voice advice is made.

The kind of animal used for the warning is determined according to the attention drawing level, and an animal that can draw user's attention more strongly is used in the case of a strong level whereas an animal that draws user's attention less than the animal in the case of a strong level is used in the case of a weak level.

Herein, the data storage means 321A of the control portion 321 of the warning device 32 stores a plurality of kinds of animal data corresponding to attention drawing levels and having different intensities of impression on users so as to symbolize a difference in attention drawing levels. The intensity of impression given to the user is determined according to the size, characteristics, and the like of an animal. In this case, data of a tiger are stored in the data storage means 321A as an animal corresponding to a strong level while data of a cat are stored therein as an animal corresponding to a weak level.

As shown in Fig. 15, for example, when the control portion 321 receives a strong level as an attention drawing level from the central controller 31 along with stop prediction information (step S11), a data selection means 321B selects the data of tiger from the data storage means 321A (step S12). Then, a signal based on the result of the selection is output from the control portion 321 to the image display portion 322 of the warning device 32 and the portable information terminal 32'. Then, an image of the tiger is displayed on the image display portion 322 of the warning device 32 and the image display portion (not shown) of the portable information terminal 32' (step S13). In addition, a signal from the control portion 321 is output to the voice synthesizing means 324, and a cry of a tiger and voice advice are synthesized. Then, these are emitted from the sound alarm portion 323 of the warning device 32 and a sound alarm portion (not shown) of the portable information terminal 32'.

On the other hand, when the control portion 321 receives a weak level as an attention drawing level from the central controller 31 along with stop prediction information (step S11), the data selection means 321B selects the data of cat from the data storage means 321A (step S12). Then, a signal based on the result of the selection is output from the control portion 321 to the image display portion 322 of the warning device 32 and the portable information terminal 32', an image of the cat is displayed on the image display portion 322 of the warning device 32 and the image display portion (not shown) of the portable information terminal 32' (step S13). In addition, a signal from the control portion 321 is output to the voice synthesizing means 324, and a cry of the cat and voice advice are synthesized. Then, these are emitted from the sound alarm portion 323 of the warning device 32 and the sound alarm portion (not shown) of the portable information terminal 32'.

Thus, by a warning given in such a form of presentation that is recognized easily by the user with the use of different animals according to attention drawing levels, the user can receive the warning more reliably. Consequently, advantageous effects similar to those in Embodiment 4 are obtained.

It should be noted that although the foregoing has described a case in which the warning and suggestion are given using data of a tiger and a cat, the kinds of animals are not limited thereto, and other forms of presentation than animals may be employed as long as they can be easily recognized by the user instantly.

Embodiment 6

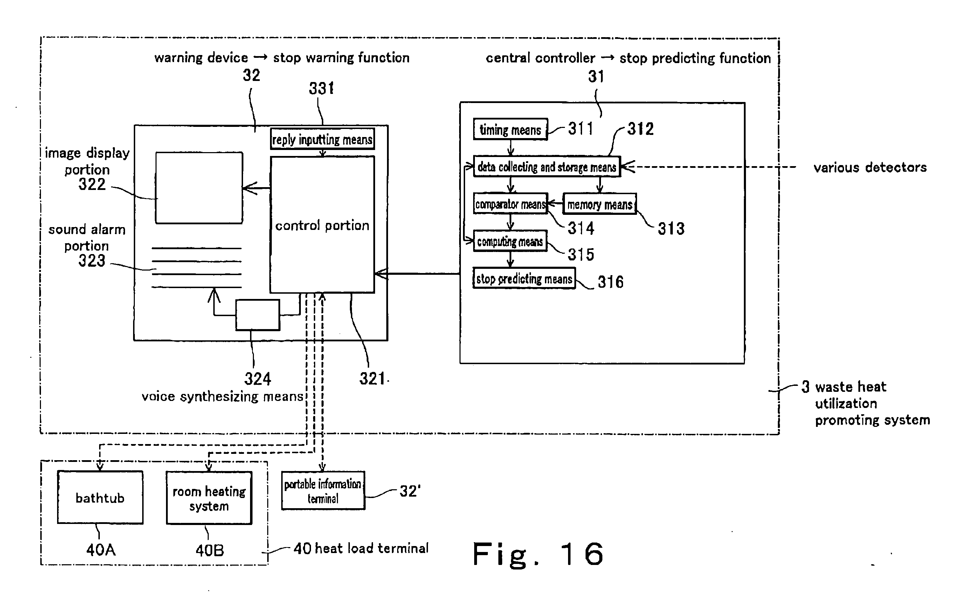

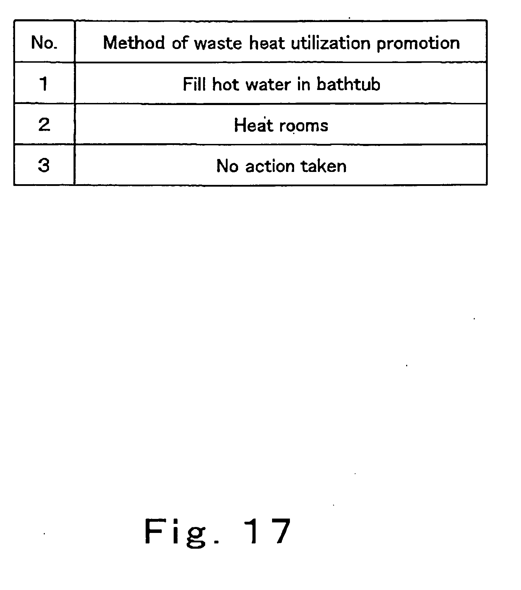

Fig. 16 is a schematic functional block diagram illustrating the configuration of a characteristic portion of a cogeneration system according to Embodiment 6 of the present invention. Fig. 17 is a table showing the content of a selection menu for a method of waste heat utilization promotion, which is displayed on image display portions of a warning device and a portable information terminal of the cogeneration system of Fig. 16.

The cogeneration system of the present embodiment has the same configuration as that of Embodiment 4 except the following points.

Specifically, in the present embodiment, the attention drawing level setting means 317A and the attention drawing level input portion 317B are omitted from the central controller 31. In addition, the warning device 32 is provided with a reply inputting means 331, and the portable information terminal is also provided with a reply inputting means (not shown). A known operation input means, such as a mouse, is used for the reply inputting means. Further, a hot water supply system, serving as the heat load terminal 40, has a bathtub 40A and a room heating system 40B, which are controlled by the control portion 321 of the warning device 31.

In the cogeneration system thus configured of the present embodiment, upon receiving stop prediction information from the stop predicting means 316 of the central controller 31, the control portion 321 of the warning device 31 controls the sound alarm portion 323 so as to let out predetermined advice and also controls the image display portion 322 so as to display a selection menu for waste heat utilization promotion methods shown in Fig. 17. Likewise, the control portion 321 controls the portable information terminal 32' so as to let out predetermined advice from its sound alarm portion and display the selection menu for waste heat utilization promotion methods shown in Fig. 17 on its image display portion.

The selection menu for waste heat utilization promotion methods are composed of, for example, numbers from 1 to 3 for identifying a menu item, and three menu items such as "fill water into bathtub (number 1)", "heat rooms (number 2)", and "no action taken (number 3)." As the predetermined advice, voice advice is let out such as "Hot water will fill up soon, and the cogeneration system will stop the operation. Please select a method of waste heat utilization promotion among the displayed menu items and input its number." Then, when the user selects a desired menu item among the displayed menu item and inputs the corresponding number into the control portion 321 using the reply inputting means 331 or the like, the control portion 321 operates as follows according to the input number.

If the number 1 is input, the control portion 321 carries out the filling of water into the bathtub 40A. This is effected, for example, by operation in which the control portion 321 releases the plug for supplying hot water into the bathtub 40A for a predetermined length of time and thereafter closes it. Alternatively, a water level sensor for detecting the upper limit of the hot water level may be provided in the bathtub 40A. Further, the control portion 321 may close the plug for supply hot water when it receives a signal that detects the upper limit of the hot water level from the just-noted water level sensor after that the control portion 321 releases the plug for supply hot water to the bathtub 40A. Thereby, the waste heat stored in the storage tank 22c is utilized before the heat storage amount reaches the heat storage limit, and an operation stop of the cogeneration system is avoided.

If the number 2 is input, the control portion 321 starts up a room heating system 40B. Thereby, the waste heat stored in the storage tank 22c is utilized ahead of schedule, and an operation stop of the cogeneration system is avoided,

On the other hand, if the number 3 is input, the control portion 321 does not particularly perform a control operation for promoting waste heat utilization. As a result, the operation of the cogeneration system stops at the point when the heat storage amount reaches a full amount.

Thus, according to the present embodiment, waste heat utilization is promoted based on the intention of the user, and moreover, the waste heat utilization is automatically carried out by the cogeneration system. Therefore, the energy saving performance and economic efficiency of the cogeneration system improves further.

[Modified Example]

Next, a modified example of the present embodiment is described. With the present modified example, when the control portion 321 of the warning device 31 receives stop prediction information from the stop predicting means 316 of the central controller 31, it controls the sound alarm portion 323 to let out predetermined advice containing a message indicating the amount of energy cost that can be reduced by waste heat utilization and to control the image display portion 322 to display the just-noted message in addition to the menu for selecting a waste heat utilization-promoting method. Likewise, it controls the portable information terminal 32' to let out predetermined advice containing the above-noted message from its sound alarm portion and to display the above-noted message on its image display portion in addition to the menu for selecting a waste heat utilization-promoting method.

The message for indicating the amount of energy cost to be reduced by waste heat utilization may be, for example, "if you avoid the operation stop by filling the bathtub with hot water, you save an energy cost of X yen, while if you avoid the operation stop by heating the room, you save an energy cost Y yen." The message is stored in advance in the storage portion of the control portion 321, and upon presenting the amount of energy cost to be reduced, it is read out from the storage portion and used therefor.

Although the foregoing Embodiments 2 to 6 have described the cases in which the heat recovery means 21 is composed of both the cooling water circulating pipe 21a and the heat recovery pipe 21d, the heat recovery means 21 may be composed of the heat recovery pipe 21d only, and the water in the storage tank 22 may serve as cooling water and directly recover waste heat from the power generator 11, as previously described in the modified example of Embodiment 1.

Moreover, in the foregoing Embodiments 1 to 6, respective reference patterns of the consumed power amount, the generated power amount, the consumed thermal energy amount, and the heat recovery amount are created regarding an operation of the cogeneration system for one day, and based on these reference patterns, effective promotion of waste heat utilization is attempted. However, the reference patterns are not limited for those of changes in one day. For example, another possible configuration is such that reference patterns of changes over one month or one year are created, and based on these reference patterns, effective promotion of waste heat utilization is attempted throughout a period of one month or one year. Alternatively, the operation of a previous day, a previous month, or the same month in a previous year may be used as a reference pattern.

Furthermore, although the foregoing Embodiments 1 to 6 have described the cases in which the central controller 31 has the reference pattern creating function and creates the reference patterns based on a cogeneration operation that has been actually performed, another configurations may be employed in which the central controller 31 itself does not have the reference pattern creating function but instead the central controller 31 stores the reference patterns in advance. For example, the system may have a configuration in which the reference patterns created by a dealer are stored. It should be noted that the configuration as those of Embodiments 1 to 5 in which the central controller 31 has the reference pattern creating function can obtain reference patterns that accurately reflect the cycle of daily life of each individual user who uses the system. Therefore, by performing waste heat utilization promotion using these reference patterns, it becomes possible to improve the economic efficiency and the energy saving performance more effectively.

Still more, the foregoing Embodiments 1 to 6 have described the cases in which the power generator 11 is a fuel cell power generation system and is equipped with a PEFC as the fuel cell. However, the fuel cell is not limited to a PEFC and may be, for example, a solid oxide electrolyte fuel cell (SOFC) or the like. Further, the system of the present invention may comprise other types of power generator 11 than the fuel cell power generation system. For example, a gas engine or a microturbine may be provided as the power generator 11. It should be noted that the gas engine and the microturbine can be restarted more quickly than the fuel cell, and thus, the amount of consumed energy required for restarting is smaller than that for the fuel cell. Therefore, a cogeneration system in which the power generator 11 is a fuel cell power generation system, the advantageous effects of the present invention can be exhibited more effectively.

Still further, although the foregoing Embodiments 1 to 6 have described the cases in which the cogeneration system is adopted for home use, the present invention is similarly applicable to cases in which the cogeneration system is adopted for industrial use.

From the foregoing description, numerous improvements and other embodiments of the present invention will be readily apparent to those skilled in the art. Accordingly, the foregoing description is to be construed only as illustrative examples and as being presented for the purpose of suggesting the best mode for carrying out the invention to those skilled in the art. Modifications may be made in specific structures and/or functions substantially without departing from the sprit of the present invention.

**Claims**

1. A cogeneration system comprising:

   a power generator configured to generate electric power and to be capable of supplying electric power to power load;
   heat recovery means for recovering waste heat from said power generator;
   heat storage means for storing the waste heat recovered by said heat recovery means to allow the waste heat to be used as a thermal energy;
   stop predicting means for predicting an operation stop of said power generator which is associated with a full heat storage amount of said heat storage means; and
   stop warning means for warning the operation stop of said power generator based on the stop prediction of said stop predicting means.

2. The cogeneration system according to claim 1, wherein said stop predicting means predicts the operation stop of said power generator based on a change over time of a heat recovery amount in said heat recovery means, a change over time of a consumed thermal energy amount in said heat storage means, and a change over time of a heat storage amount in said heat storage means.

3. The cogeneration system according to claim 2, wherein said stop predicting means predicts the operation stop of said power generator based on at least a generated power amount reference pattern, which is a reference pattern of a change over time indicating the change over time of the heat recovery amount, a consumed thermal energy amount reference pattern, which is a reference pattern of the change over time of the consumed thermal energy amount, and a heat storage amount reference pattern, which is a reference pattern of the change over time of the heat storage amount.

4. The cogeneration system according to claim 3, wherein:

said stop predicting means comprises memory means; and
said memory means stores data of the generated power amount reference pattern, the consumed thermal energy amount reference pattern, and the heat storage amount reference pattern, which have been prepared in advance separately.

5. The cogeneration system according to claim 3, wherein said stop predicting means acquires respective change patterns over time of the generated power amount, the consumed thermal energy amount, and the heat storage amount in an operation during a predetermined period, and creates the generated power amount reference pattern, the consumed thermal energy amount reference pattern, and the heat storage amount reference pattern from the acquired respective change patterns over time.

6. The cogeneration system according to claim 3, wherein:

said stop predicting means acquires the generated power amount, the consumed thermal energy amount, and the heat storage amount in a current operation, compares the acquired respective changes over time thereof with the respective corresponding reference patterns, computes an operation sustainable time which is a duration from a current time until the heat storage amount reaches a full amount, and predicts whether or not the operation of said power generator stops based on results of the comparison and the computation; and
said stop warning means performs the stop warning by at least one of an image or sound, based on stop prediction information from said stop predicting means.

7. The cogeneration system according to claim 6, wherein said stop predicting means calculates the operation sustainable time by dividing a remaining heat storage capacity in the heat storage means by a real heat recovery amount per unit time.

8. The cogeneration system according to claim 7, wherein:

said stop predicting means comprises:

a power generation amount detector for detecting the generated power amount;
a consumed thermal energy amount detector for detecting the consumed thermal energy amount;
a heat recovery amount detector for detecting the heat recovery amount;
data collecting and storage means for collecting and storing respective detected information obtained from said power generation amount detector, said consumed thermal energy amount detector, and said heat recovery amount detector;
timing means for measuring time;
computing means for computing the heat storage amount from the heat recovery amount and the consumed thermal energy amount and for computing the operation sustainable time;
memory means for storing, as the reference patterns, the respective change patterns over time of the generated power amount, the consumed thermal energy amount, and the heat storage amount obtained from respective detected information detected by said power generation amount detector and said consumed thermal energy amount detector, the detected information being stored in said data collecting and storage means, the heat storage amount computed by the computing means, and a time signal from the timing means;
comparator means for comparing the generated power amount, the consumed thermal energy amount, and the heat recovery amount acquired in the current operation with the respective corresponding reference patterns; and
stop prediction-judging means for judging whether or not the operation of said power generator is stopped from an operation sustainable time that has been computed and a result of the comparison by the comparator means; wherein
said stop warning means comprises at least one of image display means for displaying an image and sound alarm means for letting out sound based on the stop prediction information from said stop predicting means.

9. The cogeneration system according to claim 7, wherein said stop warning means performs the stop warning at predetermined time intervals within the operation sustainable time.

10. The cogeneration system according to claim 6, wherein the stop warning performed by said stop warning means includes a waste heat utilization promotion advice that notifies a user to perform a use of thermal energy before a time of the stop prediction based on the reference pattern of the consumed thermal energy amount stored in said memory means of said stop predicting means.

11. The cogeneration system according to claim 10, wherein the waste heat utilization promotion advice includes selection of whether or not to perform a use of the thermal energy automatically, and said stop warning means controls the cogeneration system so that the use of the thermal energy is automatically performed when the user selects to perform the use.

12. The cogeneration system according to claim 10, wherein the use of the thermal energy is a use of thermal energy associated with bathing, and the waste heat utilization promotion advice is such as to recommend a use of hot water associated with bathing.

13. The cogeneration system according to claim 1, wherein:

said stop predicting means further comprises attention drawing level setting means for setting a level of drawing user's attention to the stop warning from said stop warning means, and
said stop warning means performs the stop warning according to the attention drawing level set by said attention drawing level setting means.

14. The cogeneration system according to claim 13, wherein said stop warning means performs the stop warning by means of at least one of said image display means and said sound alarm means with at least one of a frequency and a presentation form according to the attention drawing level set by said attention drawing level setting means of said stop predicting means.

15. The cogeneration system according to claim 14, wherein said stop warning means further comprises data storage means storing a plurality of different warning presentation data corresponding to a plurality of the different attention drawing levels, and data selection means for selecting the warning presentation data stored in said data storage means according to the attention drawing level set by said attention drawing level setting means.

16. The cogeneration system according to claim 15, wherein:

said data storage means stores at least one of a plurality of different images of animals and a plurality of different cries of animals corresponding to the plurality of the different attention drawing levels; and
the stop warning is performed by at least one of the animal images or the animal cries selected by said data selection means.

17. The cogeneration system according to claim 1, wherein said power generator is formed by a fuel cell power generation system.

Fig. 1

Fig. 2

Fig. 3

EP 1 541 811 A2

Fig. 4

EP 1 541 811 A2

Fig. 5

Fig. 6

Fig. 7

Fig. 8

Fig. 9

start

detect consumed power amount, generated power amount, consumed thermal energy amount, and heat recovery amount — S1

input time signal from timing means — S2

reference pattern creating mode? — S3

YES — create respective reference patterns for consumed power amount, generated power amount, consumed thermal energy amount, and heat storage amount — S4

〈reference pattern creating mode〉

NO — compare consumed power amount, generated power amount, consumed thermal energy amount, and heat storage amount at present with respective reference patterns — S5

divide remaining heat storage capacity by waste heat recovery amount per unit time and compute operation sustainable time TR — S6

stop of cogeneration operation due to shortage of consumed thermal energy amount predicted? — S7

NO

YES

warning device warns stop of cogeneration operation — S8

〈waste heat utilization promotion mode〉

Fig. 10

Fig. 11

warning device → stop warning function
32

central controller → stop predicting function
31

image display portion
322

sound alarm portion
323

control portion

timing means ⌐311  ⌐312

data collecting and storage means ⟵ - - - - - - - - - various detectors

comparator means ⟵ memory means
314  313

computing means
315

stop predicting means 316

324
voice synthesizing means

321

3 waste heat utilization promoting system

Fig. 12

EP 1 541 811 A2

EP 1 541 811 A2

warning device → stop warning function
32

central controller → stop predicting function
31

image display
portion
322

sound alarm
portion
323

control portion

| timing means | 311 | 312 |

data collecting and storage means ← — — — — — — — — — — — various deteotors

comparator means ← memory means

314    313

computing means
315

stop predicting means    316

attention drawing
level input means

attention drawing level setting means ←

317A    317B

324
voice synthesizing means

321

3 waste heat
utilization
promoting system

portable information
terminal    32'

Fig. 13

warning device → stop warning function
**32**

central controller → stop predicting function
**31**

image display portion
**322**

sound alarm portion
**323**

data storage means ⊣ **321A**

data selection means ⊣ **321B**

timing means ⌐**311** ⌐**312**

data collecting and storage means

comparator means | memory means

computing means **315**

**314** **313**

stop predicting means ⌐**316**

attention drawing level setting means | attention drawing level input means

**317A** **317B**

**324**
voice synthesizing means

**321**
control portion

various detectors

**3** waste heat utilization promoting system

portable information terminal ⌐**32'**

# Fig. 14

receive stop predicting information
and attention drawing level — S11

↓

select kind of animal from
data storage means
(strong level – tiger; weak level – cat) — S12

S13 — display image of
selected animal

synthesize cry of selected animal
and voice advice — S14

↓

sound alarm — S15

# Fig. 15

Fig. 16

warning device → stop warning function

central controller → stop predicting function

32

331

reply inputting means

image display portion
322

control portion

sound alarm portion
323

324
voice synthesizing means

321

31

timing means — 311    312

data collecting and storage means ← — — — — — — — — various detectors

comparator means ← memory means

314    313

computing means
315

stop predicting means — 316

3 waste heat utilization promoting system

bathtub

room heating system

portable information terminal — 32'

40A    40B    40 heat load terminal

EP 1 541 811 A2

| No. | Method of waste heat utilization promotion |
|-----|--------------------------------------------|
| 1 | Fill hot water in bathtub |
| 2 | Heat rooms |
| 3 | No action taken |

Fig. 17

Fig. 18 PRIOR ART

EP 1 541 811 A2